# EUROPEAN PATENT APPLICATION

(11) **EP 4 763 811 A1**
(43) Date of publication of application: **24.06.2026**
(21) Application number: 24907757.9
(22) Date of filing: 31.10.2024
(51) Int. Cl.: C02F 1/469, C02F 5/08, C02F 1/461

(54) **WATER TREATMENT APPARATUS**

(30) Priority: 18.12.2023 KR 20230185192
(71) Applicant: Samsung Electronics Co., Ltd., Suwon-si, Gyeonggi-do 16677 (KR)
(72) Inventor: OH, Changhoon, Suwon-si Gyeonggi-do 16677 (KR); KIM, Yumee, Suwon-si Gyeonggi-do 16677 (KR); KIM, Hyoungkyun, Suwon-si Gyeonggi-do 16677 (KR); PARK, Heejin, Suwon-si Gyeonggi-do 16677 (KR); CHO, Youngkyu, Suwon-si Gyeonggi-do 16677 (KR)
(74) Representative: Gulde & Partner
(86) International application number: PCT/KR2024/016860
(87) International publication number: WO 2025/135472

(57) **Abstract**

A water treatment apparatus includes a housing, a stack configured to separate ions contained in fluid flowing into the housing and including a first electrode and a second electrode disposed to face the first electrode and configured to form an electric field with the first electrode, and a pressure plate provided to partition an internal space of the housing into a first internal space in which the stack is disposed and a second internal space where the pressure plate is configured to press the stack in a first direction corresponding to a stacking direction of the first electrode and the second electrode and move between a first position in which the pressure plate moves in the first direction to press the stack and a second position spaced apart from the first position to a second direction opposite to the first direction.

## Description

### [TECHNICAL FIELD]

The present disclosure relates to a water treatment apparatus using capacitive deionization technology.

### [BACKGROUND ART]

A deionization technology is a technology that is widely required across industries, such as removing hardness components, e.g., calcium and magnesium, from areas in which water has high hardness and the water is used as drinking or boiler water, or as coolant in power plants or factories.

Capacitive deionization (CDI) technology is an example of a deionization technology, and is a technology that removes ions by adsorbing the ions to an electrode with a high specific surface area using an electrochemical method.

The capacitive deionization module performs a water treatment process that removes ions by moving the ions using an electric field generated in a direction perpendicular to a direction of water flow inside a channel.

When the capacitive deionization module performs a water treatment process for a long time, scale accumulates on the electrodes and the efficiency of the water treatment process decreases.

### [DISCLOSURE]

### [TECHNICAL PROBLEM]

The present disclosure is directed to providing a water treatment apparatus having improved efficiency in removing scale attached to electrodes.

Further, the present disclosure is directed to providing a water treatment apparatus having an improved effect to remove scale attached to electrodes by using a pressure plate configured to press a stack composed of the electrodes to reduce a distance between the electrodes in a deionization process of water and to increase the distance between the electrodes in a flushing process of electrodes.

### [TECHNICAL SOLUTION]

An aspect of the present disclosure provides a water treatment apparatus including a housing, a stack configured to separate ions contained in fluid flowing into the housing and including a first electrode and a second electrode disposed to face the first electrode and configured to form an electric field with the first electrode, and a pressure plate provided to partition an internal space of the housing into a first internal space in which the stack is disposed and a second internal space, where the pressure plate is configured to press the stack in a first direction corresponding to a stacking direction of the first electrode and the second electrode and move between a first position in which the pressure plate moves in the first direction to press the stack, and a second position spaced apart from the first position to a second direction opposite to the first direction.

### [ADVANTAGEOUS EFFECTS]

The water treatment apparatus provides an improved effect to remove scale attached to electrodes by using a pressure plate configured to press a stack composed of the electrodes to reduce a distance between the electrodes in a deionization process of water and to increase the distance between the electrodes in a flushing process of electrodes.

### [DESCRIPTION OF DRAWINGS]

FIG. 1 is a schematic side cross-sectional view of a water treatment apparatus according to an embodiment of the present disclosure in a deionization operation.
FIG. 2 is a view schematically illustrating a flow of water in the water treatment apparatus according to an embodiment of the present disclosure.
FIG. 3 is a schematic view illustrating movement of ions that occurs when the water treatment apparatus according to an embodiment is in the deionization operation.
FIG. 4 is a schematic view illustrating movement of ions that occurs when the water treatment apparatus according to an embodiment is in a regeneration operation.
FIG. 5 is a schematic view illustrating a chemical reaction that occurs when the water treatment apparatus according to an embodiment is in a descaling operation.
FIG. 6 is a schematic side cross-sectional view of the water treatment apparatus according to an embodiment in the descaling operation.
FIG. 7 is a schematic side cross-sectional view of a water treatment apparatus according to an embodiment in a deionization operation.
FIG. 8 is a schematic side cross-sectional view of the water treatment apparatus according to an embodiment in a descaling operation.
FIG. 9 is a schematic side cross-sectional view of a water treatment apparatus according to an embodiment in a deionization operation.
FIG. 10 is a schematic side cross-sectional view of the water treatment apparatus according to an embodiment in a descaling operation.
FIG. 11 is a schematic side cross-sectional view of a water treatment apparatus according to an embodiment in a deionization operation.
FIG. 12 is a schematic side cross-sectional view of the water treatment apparatus according to an embodiment in a descaling operation.
FIG. 13 is a schematic side cross-sectional view of a water treatment apparatus according to an embodiment in a descaling operation.
FIG. 14 is a schematic side cross-sectional view of a water treatment apparatus according to an embodiment in a descaling operation.
FIG. 15 is a schematic side cross-sectional view of a water treatment apparatus according to an embodiment in a descaling operation.

### [MODES OF THE INVENTION]

The various embodiments and the terms used therein are not intended to limit the technology disclosed herein to specific forms, and the disclosure should be understood to include various modifications, equivalents, and/or alternatives to the corresponding embodiments.

In describing the drawings, similar reference numerals may be used to designate similar constituent elements.

A singular expression may include a plural expression unless otherwise indicated herein or clearly contradicted by context.

The expressions "A or B," "at least one of A or/and B," or "one or more of A or/and B," A, B or C," "at least one of A, B or/and C," or "one or more of A, B or/and C," and the like used herein may include any and all combinations of one or more of the associated listed items.

The term of "and / or" includes a plurality of combinations of relevant items or any one item among a plurality of relevant items.

Herein, the expressions "a first", "a second", "the first", "the second", etc., may simply be used to distinguish an element from other elements, but is not limited to another aspect (importance or order) of elements.

When an element (e.g., a first element) is referred to as being "(functionally or communicatively) coupled," or "connected" to another element (e.g., a second element), the first element may be connected to the second element, directly (e.g., wired), wirelessly, or through a third element.

In this disclosure, the terms "including", "having", and the like are used to specify features, numbers, steps, operations, elements, components, or combinations thereof, but do not preclude the presence or addition of one or more of the features, elements, steps, operations, elements, components, or combinations thereof.

When an element is said to be "connected", "coupled", "supported" or "contacted" with another element, this includes not only when elements are directly connected, coupled, supported or contacted, but also when elements are indirectly connected, coupled, supported or contacted through a third element.

Throughout the description, when an element is "on" another element, this includes not only when the element is in contact with the other element, but also when there is another element between the two elements.

A water treatment apparatus according to various embodiments may be configured to purify contaminated water to make the water clean. The water treatment apparatus is used in sewage treatment facilities, industrial processes, and water supply systems within homes or offices, and thus the water treatment apparatus may play an important role in environmental protection and human health. Water purified to a clean state by the water treatment apparatus may be discharged back into nature, used for cleaning purposes, used as drinking water, or reused in industrial processes, etc.

According to various embodiments, the water treatment apparatus may include not only a household water treatment apparatus such as a water purifier or a water softener, but also an industrial water treatment apparatus.

The water treatment apparatus may purify contaminated water through various methods such as biological treatment methods, chemical treatment methods, and physical treatment methods.

A water treatment apparatus according to an embodiment may purify contaminated water through a capacitive deionization (CDI) technology.

The capacitive deionization method refers to a method of removing ions from contaminated water using the principle of ions being adsorbed and desorbed on a surface of electrodes by electrical force generated between the electrodes. In the present disclosure, removing ions from contaminated water may include removing ions substances from the contaminated water.

The water treatment apparatus may include various components such as a plurality of pipes through which water flows, a plurality of valves configured to control a flow of water, and a capacitive deionization device configured to purify water through the CDI technology.

The capacitive deionization device may include a housing, electrodes and ion exchange membranes disposed within the housing. According to a voltage supplied to the electrodes, ions contained in water flowing into the housing may be adsorbed to or desorbed from the electrodes.

According to various embodiments, the water treatment apparatus may further include various components such as a pre-treatment filter for pre-treating raw water and supplying the water to the capacitive deionization device and/or a post-treatment filter for filtering the water purified by the capacitive deionization module once again.

The capacitive deionization device may be replaced by terms such as ion removal module in that the device removes ions.

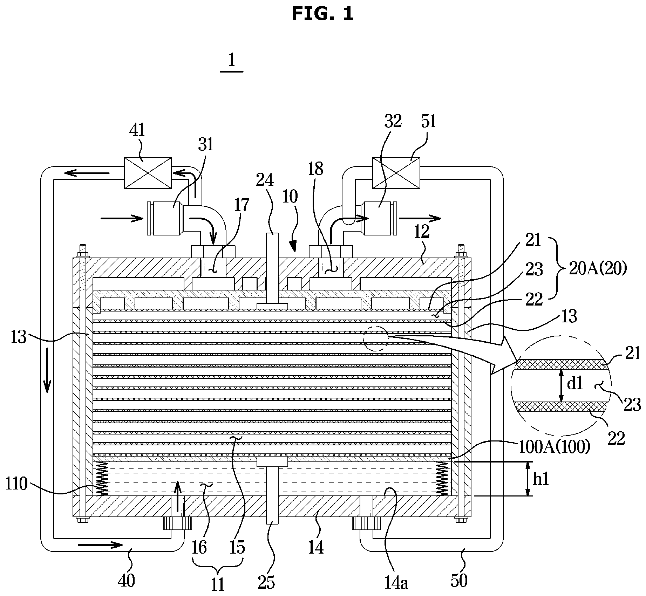

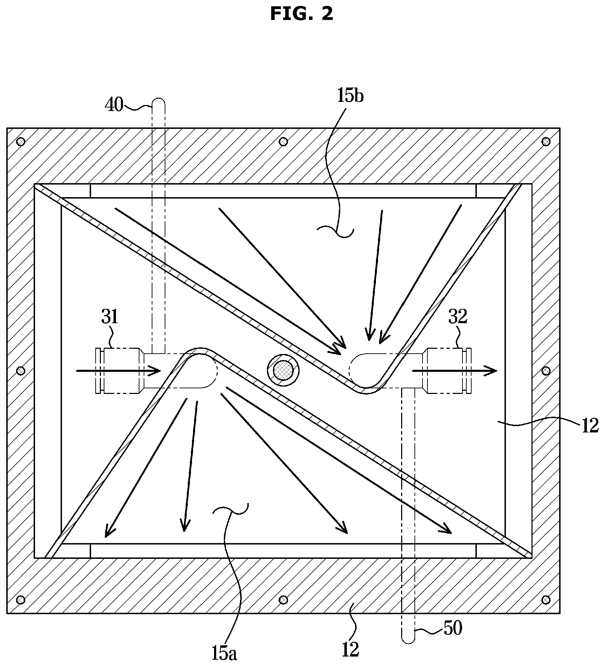

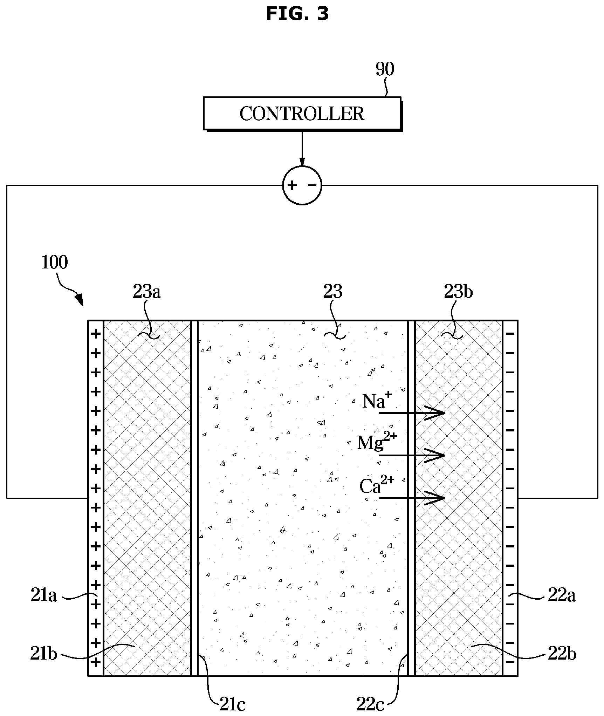

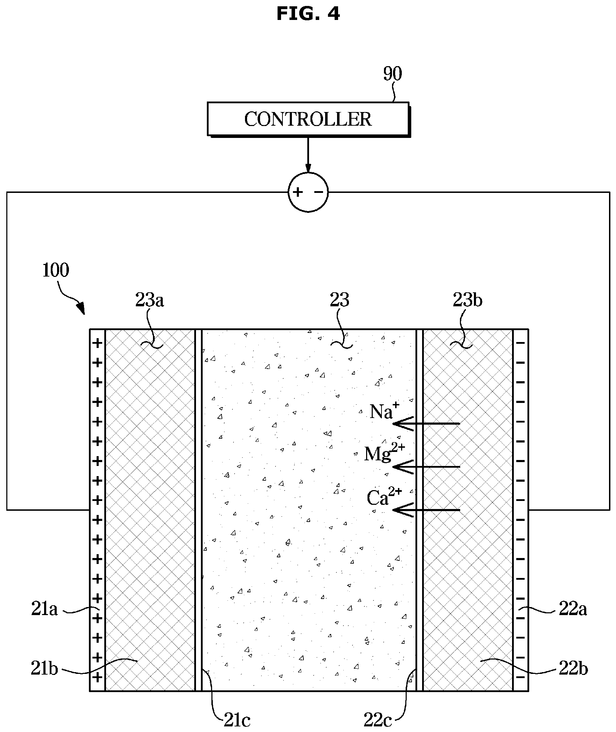

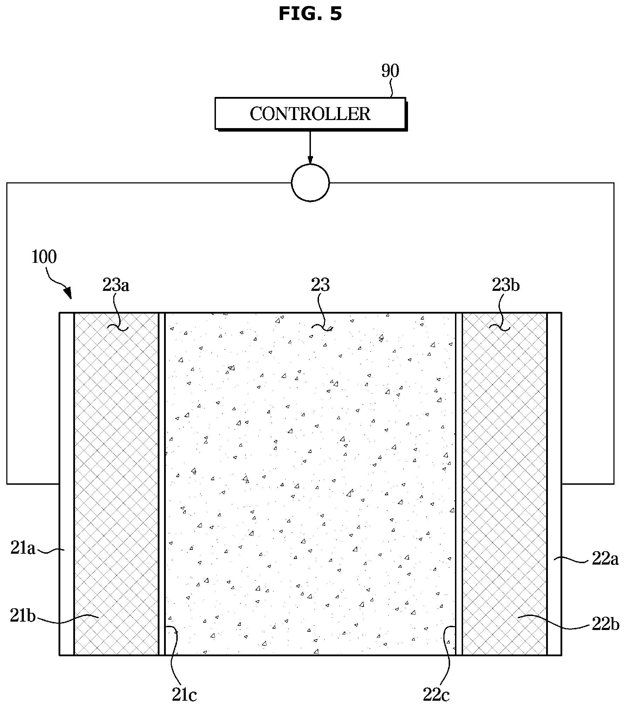

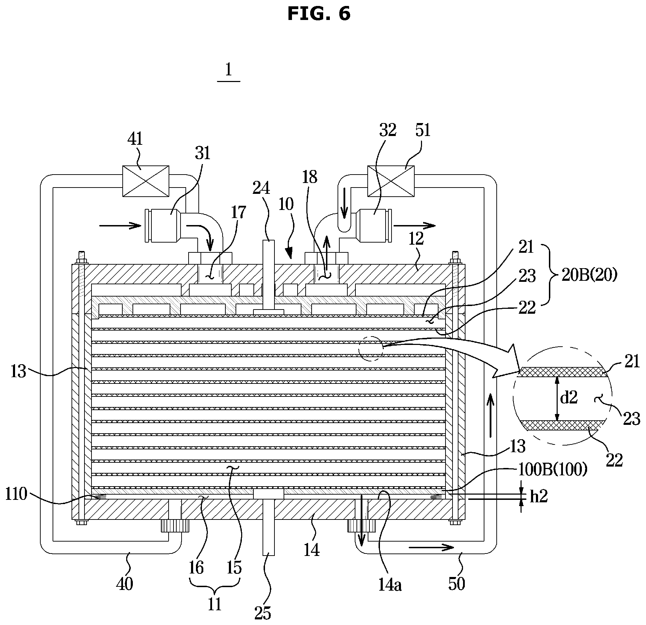

FIG. 1 is a schematic side cross-sectional view of a water treatment apparatus according to an embodiment of the present disclosure in a deionization operation, FIG. 2 is a view schematically illustrating flow of water in the water treatment apparatus according to an embodiment of the present disclosure, FIG. 3 is a schematic view illustrating movement of ions that occurs when the water treatment apparatus according to an embodiment is in the deionization operation, FIG. 4 is a schematic view illustrating movement of ions that occurs when the water treatment apparatus according to an embodiment is in a regeneration operation, FIG. 5 is a schematic view illustrating a chemical reaction that occurs when the water treatment apparatus according to an embodiment is in a descaling operation, and FIG. 6 is a schematic side cross-sectional view of the water treatment apparatus according to an embodiment in the descaling operation.

Referring to FIGS. 1 and 2, a water treatment apparatus 1 according to an embodiment may include a housing 10 through which water passes. Water flowing into the housing 10 may be deionized in an internal space 11 of the housing 10 and may be discharged from the housing 10.

The water treatment apparatus 1 may include a stack 20 disposed in the internal space 11 of the housing 10 and configured to remove ions of water, which passes through the housing 10, by moving the ions by an electric field formed by electrodes.

The internal space 11 of the housing 10 may include a first internal space 15 in which the stack 20 is disposed, and a second internal space 16 partitioned from the first internal space 15 by a pressure plate 100, which will be described later.

The housing 10 may include an inlet 17 through which water flows into the first internal space 15 and an outlet 18 through which water is discharged from the first internal space 15 to the outside of the housing 10.

The housing 10 may include an inlet flow path 15a through which water introduced into the inlet 17 flows into the first internal space 15. The inlet flow path 15a may guide the water introduced through the inlet flow path 15a to move between first and second electrodes 21 and 22 of the stack 20, which will be described later.

The housing 10 may include an outlet flow path 15b provided to guide water, which flows between the first and second electrodes 21 and 22 of the stack 20, to move to the outlet 18 so as to be discharged from the first internal space 15.

As illustrated in the drawing, the inlet 17 and the outlet 18 may each be disposed in an upper portion 12 of the housing 10. However, the present disclosure is not limited thereto, and the inlet 17 and the outlet 18 may be disposed in different positions of the housing 10, respectively.

Alternatively, the inlet 17 may be disposed in the upper portion 12 of the housing 10, and the outlet 18 may be disposed in a lower portion 14 of the housing 10. At this time, the inlet flow path 15a may be formed on the upper portion 12 of the housing 10 to correspond to the inlet 17, and the outlet flow path 15b may be formed in the lower portion 14 of the housing 10 to correspond to the outlet 18.

Alternatively, the inlet 17 and outlet 18 may each be disposed in the lower portion 14 of the housing 10.

Alternatively, the inlet 17 may be disposed in the upper portion 12 or the lower portion 14 of the housing 10, and the outlet 18 may be disposed in a side portion 13 of the housing 10. Conversely, the inlet 17 may be disposed in a side portion of the housing 10, and the outlet 18 may be disposed in the side portion 13 of the housing 10.

Alternatively, the inlet 17 and the outlet 18 may each be disposed on the side portion 13. The side portion 13 is a concept that includes all four side surfaces of the square-shaped housing 10. The inlet 17 and the outlet 18 may be disposed on the same side surface or may be spaced apart on different side surfaces.

For example, the inlet flow path 15a may be provided to allow water to flow from the inlet 17 to the stack 20, which may be positioned in various ways without limitation in position depending on the position of the inlet 17.

For example, the outlet flow path 15b may be provided to allow water to flow from the stack 20 to the outlet 18, which may be positioned in various ways without limitation in position depending on the position of the outlet 18.

The position of the inlet 17 and the outlet 18 may be not limited to any position in the housing 10. The inlet flow path 15a and the outlet flow path 15b may be also disposed to correspond to the inlet 17 and the outlet 18 without limitation in position in the housing 10.

The water treatment apparatus 1 may include a supplier 31 configured to supply water to the housing 10. The supplier 31 may be connected to the inlet 17 to supply water to the first internal space 15, and provided to allow water to be deionized by the stack 20 disposed in the first internal space 15.

For example, the supplier 31 may be connected to a supply pipe 40, which will be described later, to allow water to be supplied to the second internal space 16 through the supply pipe 40.

For example, the supplier 31 may additionally include a supply pump to smoothly supply fluid to the stack 20. As will be described later, in response to the water treatment apparatus 1 being in a descaling operation, the supply pump may increase a flow rate of the fluid supplied to the stack 20 so as to increase an efficiency of scale removal.

The water treatment apparatus 1 may include a discharge portion 32 provided to discharge water, which is discharged from the housing 10, to the outside. The discharge portion 32 may be connected to the outlet 18 to allow water, which is deionized in the first internal space 15 and then discharged, to be discharged from the housing 10.

For example, the discharge portion 32 may be connected to a discharge pipe 50, which will be described later, to allow the water stored in the second internal space 16 to be discharged to the outside of the housing 10 through the discharge pipe 50.

For example, the supplier 31 may additionally include a discharge pump to allow fluid to smoothly flow out from the stack 20. Further, as will be described later, in response to the water treatment apparatus 1 being in the descaling operation, the discharge pump may be provided to smoothly discharge the fluid stored in the second space 16.

The stack 20 may include a first electrode 21 and a second electrode 22. The stack 20 may include a plurality of first electrodes 21 and a plurality of second electrodes 22, and the plurality of first electrodes 21 and the plurality of second electrodes 22 may be arranged to be alternately stacked. The plurality of first electrodes 21 and the plurality of second electrodes 22 may be all formed in the same shape. Hereinafter, among the plurality of first electrodes 21 and the plurality of second electrodes 22, only the first electrode 21 and the second electrode 22, which face each other, will be described for convenience of description.

The stack 20 may include a channel 23 formed between the first electrode 21 and the second electrode 22, and through which water flows.

The channel 23 may be provided in a space between the first electrode 21 and the second electrode 22. Therefore, the channel 23 may also be referred to as a separation space between the first electrode 21 and the second electrode 22.

The first electrode 21 and the second electrode 22 may be arranged to face each other. The first electrode 21 and the second electrode 22 may form an electric field. Accordingly, deionization of the water flowing in the channel 23 between the first electrode 21 and the second electrode 22 may proceed.

The stack 20 may also be referred to as an ion removal module 20, which includes the pair of electrodes 21 and 22 and the channel 23 to remove ions from the fluid.

The stack 20 may also be referred to as an ion removal cell 20, which includes the pair of electrodes 21 and 22 and the channel 23 to remove ions from the fluid. The first electrode 21 and the second electrode 22 may be electrically connected to external terminals 24 and 25, respectively. Referring to FIGS. 3 to 5, the first electrode 21 may include a first ion exchange membrane 21c. The second electrode 22 may include a second ion exchange membrane 22c.

The first electrode 21 and the second electrode 22 may be disposed to face each other, and the first electrode 21 and the second electrode 22 may form a capacitor.

The first electrode 21 may include a first current collector 21a and a first porous electrode 21b.

As will be described later, the first electrode 21 may become a positive electrode (anode) in response to the water treatment apparatus 1 being in the deionization operation, and the first electrode 21 may become a negative electrode (cathode) in the regeneration operation or the descaling operation.

According to an embodiment, the first current collector 21a may include an electrode plate electrically connected to the first porous electrode 21b. The electrode plate may include a metal plate and/or a non-metallic plate.

The first current collector 21a may be a conductor. For example, a material of the first current collector 21a may be graphite, but the material of the first current collector 21a is not limited thereto.

The first porous electrode 21b may include a solid electrode including a void space. The first porous electrode 21b may be formed of a material that easily adsorbs ions. For example, the first porous electrode 21b may be a carbon porous electrode, but the type of the first porous electrode 21b is not limited thereto.

The second electrode 22 may include a second current collector 22a and a second porous electrode 22b.

As will be described later, the second electrode 22 may be a negative electrode (cathode) in response to the water treatment apparatus 1 being in the deionization operation, and may be a positive electrode (anode) in the regeneration operation or the descaling operation.

According to an embodiment, the second current collector 22a may include an electrode plate electrically connected to the second porous electrode 22b. The electrode plate may include a metal plate and/or a non-metallic plate.

The second current collector 22a may be a conductor.

For example, a material of the second current collector 22a may be selected from a group consisting of transition metal, transition metal oxide, transition metal alloy, aluminum, aluminum oxide, aluminum alloy, graphene, dimensionally stable anode (DSA), and boron doped diamond (BDD) electrode.

The transition metal may include Pt, Ru, Ir, Rh, Ni, Fe, Co, Cu, Fe, etc. The transition metal alloy may include Ni-containing materials such as NiCo and Ni/B.

According to an embodiment, the transition metal alloy may include alloy of transition metal oxides.

The DSA may include a Ti material coated with a metal oxide. The DSA may include RuO₂/Ti, IrO₂/Ti, or PtO₂/Ti.

The material of the first current collector 21a may also be the same as that of the second current collector 22a.

However, due to economic reasons, the materials of the first current collector 21a and the second current collector 22a may be different from each other according to an embodiment. For example, the material of the first current collector 21a may be graphite, and the material of the second current collector 22a may be selected from a group consisting of transition metal, transition metal oxide, transition metal alloy, aluminum, aluminum oxide, aluminum alloy, graphene, DSA, and BDD electrode.

The second porous electrode 22b may include a solid electrode including a void space. The second porous electrode 22b may be formed of a material that easily adsorbs ions. For example, the second porous electrode 22b may be a carbon porous electrode, but the type of the second porous electrode 22b is not limited thereto.

For example, the material of the second porous electrode 22b may be selected from a group consisting of transition metal, transition metal oxide, transition metal alloy, aluminum, aluminum oxide, aluminum alloy, graphene, DSA, and BDD electrode. Particularly, the second porous electrode 22b may include a nickel porous electrode.

The material of the first porous electrode 21b may also be the same as that of the second porous electrode 22b.

However, due to economic reasons, the materials of the first porous electrode 21b and the second porous electrode 22b may be different from each other according to an embodiment. For example, the material of the first porous electrode 21b may be carbon, and the material of the second porous electrode 22b may be selected from a group consisting of transition metal, transition metal oxide, transition metal alloy, aluminum, aluminum oxide, aluminum alloy, graphene, DSA, and BDD electrode.

The channel 23 may be formed by the first ion exchange membrane 21c and a second ion exchange membrane 22c.

A first electrode channel 23a may be defined as a component included in the first electrode 21, and a second electrode channel 23b may be defined as a component included in the second electrode 22.

The first electrode 21 may include the first electrode channel 23a formed by the first current collector 21a and the first ion exchange membrane 21c.

The second electrode 22 may include the second electrode channel 23b formed by the second current collector 22a and the second ion exchange membrane 22c.

However, the present disclosure is not limited thereto, and the first electrode channel 23a and the second electrode channel 23b may also be defined as a component included in the channel 23.

The first electrode channel 23a may include a space between the first current collector 21a and the first ion exchange membrane 21c. The second electrode channel 23b may include a space between the second current collector 22a and the second ion exchange membrane 22c. The channel 23 may include a space between the first ion exchange membrane 21c and the second ion exchange membrane 22c.

The first electrode channel 23a, the second electrode channel 23b, and the channel 23 may be distinguished from each other by the ion exchange membranes 21c and 22c, and thus the first electrode channel 23a, the second electrode channel 23b, and the channel 23 may be replaced by terms such as compartment, space, room or chamber.

The first ion exchange membrane 21c and the second ion exchange membrane 22c may include a membrane through which fluid passes.

The first electrode channel 23a, the second electrode channel 23b, and the channel 23 may be fluidly connected to each other. For example, the fluid in the channel 23 may move to the first electrode channel 23a and/or the second electrode channel 23b, and conversely, the fluid in the first electrode channel 23a and/or the second electrode channel 23b may move to the channel 23.

The second ion exchange membrane 22c may include a membrane that transmits only positive ions among positive ions and negative ions. The second ion exchange membrane 22c may have a negative charge so as to transmit positive ions without transmitting negative ions.

The first ion exchange membrane 21c may include a membrane that transmits only negative ions among positive ions and negative ions. The first ion exchange membrane 21c may have a positive charge, so as to transmit negative ions without transmitting positive ions.

The ion exchange membranes 21c and 22c may include a synthetic resin membrane.

When a positive voltage is applied to the first current collector 21a, the first electrode 21 may become a positive electrode (anode), and when a negative voltage is applied to the second current collector 22a, the second electrode 22 may become the negative electrode (cathode). Accordingly, when a positive voltage is applied to the first current collector 21a and a negative voltage is applied to the second current collector 22a, positive ions in the channel 23 may move to the second electrode channel 23b, and negative ions in the channel 23 may move to the first electrode channel 23a.

Applying a positive voltage to the first current collector 21a may include applying a negative voltage to the second current collector 22a.

Applying a positive voltage to the first current collector 21a and applying a negative voltage to the second current collector 22a may include applying a positive voltage between the first current collector 21a and the second current collector 22a.

Applying a positive voltage between the first current collector 21a and the second current collector 22a may include allowing a potential of the first current collector 21a to be higher than a potential of the second current collector 22a.

When a negative voltage is applied to the first current collector 21a, the first electrode 21 may become a negative electrode (cathode), and when a positive voltage is applied to the second current collector 22a, the second electrode 22 may become a positive electrode (anode). Accordingly, when a negative voltage is applied to the first current collector 21a and a positive voltage is applied to the second current collector 22a, positive ions in the second electrode channel 23b may move to the channel 23, and negative ions in the first electrode channel 23a may move to the channel 23.

Applying a negative voltage to the first current collector 21a may include applying a positive voltage to the second current collector 22a.

Applying a negative voltage to the first current collector 21a and applying a positive voltage to the second current collector 22a may include applying a negative voltage between the first current collector 21a and the second current collector 22a.

Applying a negative voltage between the first current collector 21a and the second current collector 22a may include allowing a potential of the first current collector 21a to be lower than a potential of the second current collector 22a.

The first porous electrode 21b may be provided in the first electrode channel 23a, and the second porous electrode 22b may be provided in the second electrode channel 23b.

As a positive voltage is applied between the first current collector 21a and the second current collector 22a, negative ions moved to the first electrode channel 23a may be adsorbed to the first porous electrode 21b, and positive ions moved to the second electrode channel 23b may be adsorbed to the second porous electrode 22b.

As a negative voltage is applied between the first current collector 21a and the second current collector 22a, negative ions adsorbed on the first porous electrode 21b may be desorbed from the first porous electrode 21b, and positive ions adsorbed on the second porous electrode 22b may be desorbed from the second porous electrode 22b.

The water treatment apparatus 1 according to an embodiment may include a controller 90.

The water treatment apparatus 1 according to an embodiment may have at least three operation modes. For example, the water treatment apparatus 1 according to an embodiment may have a deionization operation mode, a regeneration operation mode, and a descaling operation mode.

In the deionization operation, the water treatment apparatus 1 may perform a deionization process on the fluid that is provided to the stack 20.

In the regeneration operation, the water treatment apparatus 1 may perform a regeneration process to desorb ions adsorbed on the first electrode 21 and the second electrode 22 of the capacitive deionization module 100.

In the descaling operation, the water treatment apparatus 1 may perform a descaling process to remove scale generated on the first electrode 21 and the second electrode 22 of the capacitive deionization module 100.

The controller 90 may control the water treatment apparatus 1 to allow the water treatment apparatus 1 to operate in any one operation mode among the deionization operation, the regeneration operation, and the descaling operation based on a user input signal, a signal detected by a sensor, etc., and/or a set signal.

The controller 90 may control various components of the water treatment apparatus 1. For example, the controller 90 may control a voltage applied to the first electrode 21 and the second electrode 22.

The controller 90 may include hardware such as a CPU, a Mi-com or memory, and software such as a control program. For example, the controller 90 may include at least one memory for storing an algorithm and program-type data for controlling the operation of components in the water treatment apparatus 1, and at least one processor configured to perform the above-mentioned operation by using the data stored in the at least one memory. The memory and the processor may each be implemented as separate chips. The processor may include one or more processor chips or may include one or more processing cores. The memory may include one or more memory chips or one or more memory blocks. Alternatively, the memory and the processor may be implemented as a single chip

According to an embodiment, the controller 90 may control the water treatment apparatus 1 to perform the descaling operation based on performing the deionization operation and the regeneration operation a predetermined number of times. At this time, the predetermined number of times may be set by a user. According to an embodiment, the controller 90 may control the water treatment apparatus 1 to perform the descaling operation based on the satisfaction of a predetermined condition by a sensor or the like. As another example, the controller 90 may control the water treatment apparatus 1 to perform the descaling operation after the deionization operation is performed or after the regeneration operation is performed.

The water treatment apparatus 1 according to an embodiment may perform the deionization operation, the regeneration operation, and/or the descaling operation.

The water treatment apparatus 1 may apply a negative voltage to the second current collector 22a in the deionization operation. Applying a negative voltage to the second current collector 22a may include applying a positive voltage to the first current collector 21a.

Applying a negative voltage to the second current collector 22a may include applying a negative voltage between the second current collector 22a and the first current collector 21a.

Applying a negative voltage between the second current collector 22a and the first current collector 21a may include allowing a difference between a voltage applied to the second current collector 22a and a voltage applied to the first current collector 21a to be a negative voltage.

Applying a negative voltage to the second current collector 22a may include applying a positive voltage between the first current collector 21a and the second current collector 22a.

Applying a positive voltage between the first current collector 21a and the second current collector 22a may include allowing a difference between a voltage applied to the first current collector 21a and a voltage applied to the second current collector 22a to be a positive voltage.

In the deionization operation, the controller 90 may apply a negative voltage to the second current collector 22a to allow positive ions contained in the water of the channel 23 to move to the second electrode channel 23b.

A magnitude of a negative voltage applied to the second current collector 22a in the deionization operation may be approximately 0.6 V or less. That the magnitude of the negative voltage applied to the second current collector 22a is 0.6V or less may include that a negative voltage applied to the second current collector 22a is -0.6V or more.

A magnitude of a positive voltage applied to the first current collector 21a in the deionization operation may be approximately 0.6 V or less. That the magnitude of the positive voltage applied to the first current collector 21a is 0.6V or less may include that a positive voltage applied to the first current collector 21a is +0.6V or less.

In the deionization operation, positive ions in the channel 23 may move to the second electrode channel 23b through the second ion exchange membrane 22c and be adsorbed on the second porous electrode 22b.

The regeneration operation may refer to an operation in which positive ions, which are adsorbed on the second electrode 22 used as a cathode in the deionization operation, are desorbed and then moved to the channel 23 and wastewater containing a large amount of positive ions is discharged to the outside of the capacitive deionization module 100.

The water treatment apparatus 1 may apply a first positive voltage to the second current collector 22a in the regeneration operation.

Applying the first positive voltage to the second current collector 22a may include applying a first negative voltage to the first current collector 21a.

Applying the first positive voltage to the second current collector 22a may include applying a positive voltage between the second current collector 22a and the first current collector 21a.

Applying a positive voltage between the second current collector 22a and the first current collector 21a may include allowing a difference between a voltage applied to the second current collector 22a and a voltage applied to the first current collector 21a to be a positive voltage.

Applying a positive voltage to the second current collector 22a may include applying a negative voltage between the first current collector 21a and the second current collector 22a.

Applying a negative voltage between the first current collector 21a and the second current collector 22a may include allowing a difference between a voltage applied to the first current collector 21a and a voltage applied to the second current collector 22a to be a negative voltage.

The controller 90 may allow positive ions in the second electrode channel 23b to move into the channel 23 by applying a first positive voltage to the second current collector 22a in the regeneration operation.

A magnitude of the first positive voltage applied to the second current collector 22a in the regeneration operation may be preset within a range in which water in the second electrode channel 23b is not electrolyzed. The magnitude of the first positive voltage applied to the second current collector 22a in the regeneration operation may be the same as or similar to a magnitude of a negative voltage applied to the second current collector 22a in the deionization operation. A magnitude of the negative voltage applied to the first current collector 21a in the regeneration operation may be the same as or similar to the magnitude of the negative voltage applied to the second current collector 22a in the deionization operation.

For example, a magnitude of a first positive voltage applied to the second current collector 22a in the regeneration operation may be approximately 0.6 V or less. That is, the first positive voltage may be +0.6V or less.

In the regeneration operation, positive ions adsorbed on the second porous electrode 22b may move into the channel 23 through the second ion exchange membrane 22c. In the regeneration operation, positive ions adsorbed on the second porous electrode 22b may move to water in the channel 23 through the second ion exchange membrane 22c. However, the positive ions in the channel 23 may not move to the first electrode channel 23a through the first ion exchange membrane 21c.

The water treatment apparatus 1 may repeatedly perform the deionization operation and the regeneration operation according to a predetermined cycle.

The water treatment apparatus 1 may perform the descaling operation based on the satisfaction of predetermined conditions.

The descaling operation may refer to an operation to remove scale attached to the second ion exchange membrane 22c and the second porous electrode 22b, unlike the regeneration operation to desorb positive ions adsorbed on the second porous electrode 22b. Scale may contain impurities (e.g. CaCO₃, Mg (OH)₂) such as metallic oxides and precipitates.

However, the present disclosure is not limited thereto, and in the descaling operation, scale attached to the first ion exchange membrane 21c and the first porous electrode 21b may be removed.

In response to the deionization operation and the regeneration operation being repeatedly performed according to the predetermined cycle, scale may be attached to the second electrode 22, which is used as a cathode in the deionization operation. For example, scale may be attached to both side surfaces of the second ion exchange membrane 22c and the second porous electrode 22b.

According to the present disclosure, the water treatment apparatus 1 according to an embodiment may remove scale by detaching the scale attached to the first electrode 21 and the second electrode 22 by increasing a flow rate of the fluid flowing inside the channel 23 without a separate external device.

The controller 90 may apply a negative voltage to the second current collector 22a in the deionization operation.

When a negative voltage is applied to the second current collector 22a, positive ions contained in the fluid in the channel 23 may move to the second electrode channel 23b.

Positive ions in the fluid may include sodium ions (Na⁺), magnesium ions (Mg²⁺), and calcium ions (Ca²⁺).

Positive ions contained in water in the channel 23 may be adsorbed on the second porous electrode 22b while moving to the second electrode channel 23b.

Accordingly, in response to the water treatment apparatus 1 performing the deionization operation, positive ions in the water of the channel 23 may be removed.

Applying a negative voltage to the second current collector 22a may include applying a positive voltage to the first current collector 21a.

When a positive voltage is applied to the first current collector 21a, negative ions contained in the fluid of the channel 23 may move to the first electrode channel 23a.

The controller 90 may apply a first positive voltage to the second current collector 22a in the regeneration operation.

When the first positive voltage is applied to the second current collector 22a, positive ions in the second electrode channel 23b may move to the channel 23. Positive ions in the second electrode channel 23b may include positive ions adsorbed on the second porous electrode 22b in the deionization operation.

The positive ions adsorbed on the second porous electrode 22b may include sodium ions (Na⁺), magnesium ions (Mg²⁺), and calcium ions (Ca²⁺).

The positive ions adsorbed on the second porous electrode 22b may be desorbed from the second porous electrode 22b and move to the channel 23.

Meanwhile, positive ions in the channel 23 may not move to the first electrode channel 23a through the first ion exchange membrane 21c.

Accordingly, in response to the water treatment apparatus 1 performing the regeneration operation, the positive ions adsorbed on the second porous electrode 22b may be desorbed, and accordingly, the ion adsorption efficiency of the second porous electrode 22b may be restored.

Applying the first positive voltage to the second current collector 22a may include applying a negative voltage to the first current collector 21a.

When a negative voltage is applied to the first current collector 21a, negative ions in the first electrode channel 23a may move to the channel 23. Negative ions in the first electrode channel 23a may include negative ions adsorbed on the first porous electrode 21b in the deionization operation.

Meanwhile, negative ions in the channel 23 may not move to the second electrode channel 23b through the second ion exchange membrane 22c.

Accordingly, in response to the water treatment apparatus 1 performing the regeneration operation, the negative ions adsorbed on the first porous electrode 21b may be desorbed, and accordingly, the ion adsorption efficiency of the first porous electrode 21b may be restored.

The water treatment apparatus 1 may alternately perform the deionization operation and the regeneration operation. Meanwhile, when the water treatment apparatus alternately performs the deionization operation and the regeneration operation, scale (e.g., CaCO₃, Mg (OH)₂) may be precipitated according to the movement of positive and negative ions. Scale may be mainly generated on the second electrode 22, which has a high concentration of positive ions, or on both surfaces of the second ion exchange membrane 22c. Both side surfaces of the second ion exchange membrane 22c may include a side surface adjacent to the second electrode channel 23b and a surface adjacent to the channel 23.

When a large amount of scale is precipitated on the second electrode 22 or both side surfaces of the second ion exchange membrane 22c, a space through which water flows may be reduced in the second electrode channel 23b and further the ion adsorption in the second porous electrode 22b may be disturbed, thereby significantly reducing the efficiency of the deionization operation.

Accordingly, there is a need to remove scale precipitated inside the stack 20.

According to an embodiment of the present disclosure, the water treatment apparatus 1 may remove scale precipitated inside the capacitive deionization module by performing the descaling operation without using an external device or user intervention.

As illustrated in FIG. 5, a width of the channel 23 in the descaling operation of the water treatment apparatus 1 may be greater than a width of the channel 23 in the deionization operation and/or regeneration operation, and thus a flow rate of fluid flowing in the channel 23 may be increased, as will be described later. Accordingly, as a large amount of fluid flows, the fluid may strike scale formed on the second electrode 22 with greater force, and thus the fluid may separate the scale from the second electrode 22, thereby removing the scale.

In the conventional manner, in order to improve a performance of a descaling operation, which removes scale generated on an electrode of a stack of a water treatment apparatus, an acidic substance such as citric acid is added to the water to make the water acidic in the descaling operation, thereby removing scale remaining on the electrode. However, as chemicals are continuously consumed, it is required to periodically replace a component configured to input the chemicals. Further, the scale on the electrode in the stack is physically removed by moving water to the inside of the stack. However, as water flows between electrodes, scale remaining on the electrodes is physically pressed and thus the scale is removed. A distance between the electrodes is maintained at a predetermined length, and thus the water may not reach a certain water pressure that is required to remove the scale on the electrode.

In other words, when the distance between electrodes is formed to be greater than a predetermined length, water in a position away from each electrode is relatively fast and water in a position closer to each electrode is relatively slow. Therefore, as for the water flowing between the electrodes, removal of ions occurs relatively quickly in water passing through a portion adjacent to each electrode, and removal of ions occurs relatively slowly in water passing through a portion relatively distant from each electrode. Accordingly, as for the water flowing between the electrodes, an ion concentration of the water passing through the region adjacent to each electrode may be lower than an ion concentration of the water passing through the portion distant from each electrode, and thus a distance between the electrodes may be formed in a predetermined length to prevent differences in ion concentration in the water flowing between the electrodes. That is, the predetermined length may mean a length of the distance between the electrodes in which no difference in ion concentration occurs in the water flowing between the electrodes.

However, in the descaling operation, scale removal may be performed by physical contact with the flow of water. As the distance between the electrodes increases, a flow rate between the electrodes may increase. As the flow rate between the electrodes increases in the descaling operation, the scale removal efficiency of the electrode may increase. Further, as the distance between the electrodes increases, a separation between the ion exchange membrane of each electrode and the current collector increases, thereby increasing the scale removal efficiency of the electrode.

That is, in order to increase the efficiency of deionization, the distance between electrodes may be maintained at a predetermined distance. The fluidity of water in the descaling operation may be reduced due to the predetermined distance and thus the scale removal effect of the electrodes may be reduced.

To ease the difficulty, a distance d1 between the first electrode 21 and the second electrode 22 in response to the water treatment apparatus 1 being in the deionization operation may be formed to be less than a distance d2 between the first electrode 21 and the second electrode 22 in response to the water treatment apparatus 1 being in the descaling operation.

That is, as shown in FIGS. 1, 6 and 7, the water treatment apparatus 1 may be provided to allow the distance d1 between the first electrode 21 and the second electrode 22 to be narrow so as to increase the deionization efficiency during the deionization operation. Further, the water treatment apparatus 1 may be provided to allow the distance d2 between the first electrode 21 and the second electrode 22 to be wide so as to increase the scale removal efficiency during the descaling operation. Therefore, the efficiency in each operation may be increased.

At this time, as the distance between the first electrode 21 and the second electrode 22 is required to change depending on the deionization operation and the descaling operation, a user needs to additionally manipulate the water treatment apparatus 1 to adjust the distance between the first electrode 21 and the second electrode 22 according to each operation mode, which may cause the user inconvenience.

To ease the difficulty, the water treatment apparatus 1 may include a pressure plate 100 configured to adjust the distance between the first electrode 21 and the second electrode 22 according to each operation mode.

The pressure plate 100 may press the stack 20 to allow the distance d1 between the first electrode 21 and the second electrode 22 in the deionization operation of the water treatment apparatus 1 to be less than the distance d2 between the first electrode 21 and the second electrode 22 in the descaling operation.

The pressure plate 100 may press the stack 20 in a stacking direction of the first electrode 21 and the second electrode 22 to allow the distance d1 between the first electrode 21 and the second electrode 22 to be reduced, and the pressure plate 100 may support the stack 20 to allow the reduced distance d1 between the first electrode 21 and the second electrode 22 to be maintained.

The pressure plate 100 may release the pressure on the stack 20 to allow the distance d2 between the first electrode 21 and the second electrode 22 in the descaling operation of the water treatment apparatus 1, to be greater than the distance d1 between the first electrode 21 and the second electrode 22 during the deionization operation.

The pressure plate 100 may release the pressure on the stack 20 in the stacking direction of the first electrode 21 and the second electrode 22 to allow the distance d2 between the first electrode 21 and the second electrode 22 to be increased, and the pressure plate 100 may support the stack 20 to allow the increased distance d2 between the first electrode 21 and the second electrode 22 to be maintained.

The pressure plate 100 is a component configured to transmit a certain level of pressure to the stack 20 and may also be referred to as the pressurization plate 100 or the transmission plate 100.

Further, the pressure plate 100 is a component configured to support the stack 20 and may also be referred to as the support plate 100.

Further, the pressure plate 100 is a component configured to divide the internal space 11 of the housing 10 and may also be referred to as the partition plate 100.

In addition, according to an embodiment, the pressure plate 100 may be provided in a plate shape, but is not limited thereto. The pressure plate 100 may be provided as a member having another shape that presses or supports the stack 20 and partitions the internal space 11 of the housing 10. Accordingly, the pressure plate 100 may also be referred as the pressure member 100, the support member 100, the pressurization member 100, the transmission member 100, or the partition member 100.

In addition, according to an embodiment, the pressure plate 100 may be provided in a plate shape, but is not limited thereto. The pressure plate 100 may be provided as a portion of the housing 10 that supports and presses the stack 20, and partitions the internal space 11 of the housing 10. Accordingly, the pressure plate 100 may also be referred to as the pressure portion 100, the support portion 100, the pressurization portion 100, the transmission portion 100, or the partition portion 100.

According to an embodiment, it is illustrated that the pressure plate 100 presses the stack 20, but is not limited thereto. Alternatively, the pressure plate 100 may support the stack 20 and transmit a predetermined pressure to the stack 20.

In addition, according to an embodiment, it is illustrated that the pressure plate 100 presses the stack 20, but is not limited thereto. Alternatively, it may be illustrated that the pressure plate 100 compresses and expands the stack 20, or the pressure plate 100 increases or reduces a width of the channel 23 of the stack 20, or the pressure plate 100 reduces or increases a distance between the first electrode 21 and the second electrode 22.

In addition, according to an embodiment, it is illustrated that the pressure plate 100 presses the stack 20, but is not limited thereto. It may be illustrated that the pressure plate 100 adjusts a compressive force applied to the stack 20.

Hereinafter the distance d1 between the first electrode 21 and the second electrode 22 in the deionization operation of the water treatment apparatus 1 is defined as a first distance d1, and the distance d2 between the first electrode 21 and the second electrode 22 in the descaling operation of the water treatment apparatus 1 is defined as a second distance d2.

An upper end of the stack 20 may be supported by the upper portion 12 of the housing 10 and a lower end of the stack 20 may be supported by the pressure plate 100. At this time, when the pressure plate 100 presses the stack 20, the first electrode 21 and the second electrode 22 stacked inside the stack 20 may be disposed close to each other by the pressure of the pressure plate 100, and thus the distance between the first electrode 21 and the second electrode 22 may be reduced so as to be the same as the first distance d1.

The first distance d1 may correspond to the width of the channel 23 in the deionization operation of the water treatment apparatus 1. As the width of the channel 23, through which water flows, decreases, a deionization rate of water flowing through the channel 23 may be maintained constant in the deionization operation of the water treatment apparatus 1.

The pressure plate 100 may release the pressure applied on the stack 20 in the deionization operation, so as to allow the distance between the first electrode 21 and the second electrode 22 to be increased and to be the same as the second distance d2 in the descaling operation of the water treatment apparatus 1.

The stack 20 may be contracted in the stacking direction of the first electrode 21 and the second electrode 22 due to the pressure of the pressure plate 100 toward the stack 20. However, as the pressure of the pressure plate 100 toward the stack 20 is released, the contraction of the stack 20 in the stacking direction of the first electrode 21 and the second electrode 22 may disappear and a shape of the stack 20 in the stacking direction may be restored.

Accordingly, the second distance d2 formed when the pressure of the pressure plate 100 is released may be greater than the first distance d1 formed when the pressure plate 100 presses the stack 20.

The state in which the pressure of the pressure plate 100 toward the stack 20 is released may include a state in which the pressure plate 100 does not press the stack 20 to the stacking direction of the first electrode 21 and the second electrode 22, but is not limited thereto. The state in which the pressure of the pressure plate 100 toward the stack 20 is released may include a state in which the pressure plate 100 presses the stack 20 with a pressure that is less than a pressure with which the pressure plate 100 presses the stack 20 in the deionization operation of the water treatment apparatus 1.

The stack 20 may include a spacer (not shown) disposed on the channel 23 and provided to support the first electrode 21 and the second electrode 22 in the stacking direction of the first electrode 21 and the second electrode 22.

The spacer may be provided to contract and expand in the stacking direction of the first electrode 21 and the second electrode 22.

When the pressure plate 100 presses the stack 20, the spacer may contract in the stacking direction of the first electrode 21 and the second electrode 22, and when the pressure of the pressure plate 100 is released, the spacer may extend in the stacking direction of the first electrode 21 and the second electrode 22.

Due to the contraction and extension of the spacer in the stacking direction of the first electrode 21 and the second electrode 22, the distance between the first electrode 21 and the second electrode 22 may be reduced or increased.

For example, the spacer may be disposed at both ends of the first electrode 21 and the second electrode 22 in the channel 23 with respect to a direction in which the first electrode 21 and the second electrode 22 extend.

For example, the spacer may be disposed in approximately the entire area of the channel 23 in the direction in which the first electrode 21 and the second electrode 22 extend.

For example, the spacer may be disposed in at least some area of the channel 23 to support the first electrode 21 and the second electrode 22.

For example, the spacer may be formed of a water-permeable material to allow water to flow on the channel 23.

For example, the spacer may be formed of a material that absorbs water and releases the absorbed water.

However, the stack 20 is not limited thereto and the stack 20 may not include the spacer, but include a support portion provided to support the first electrode 21 and the second electrode 22 from both ends of the first electrode 21 and the second electrode 22 in the direction in which the first electrode 21 and the second electrode 22 extend.

The support portion may support the first electrode 21 and the second electrode 22 to reduce the distance d1 between the first electrode 21 and the second electrode 22 when the pressure plate 100 presses the stack 20. The support portion may support the first electrode 21 and the second electrode 22 to increase the distance d2 between the first electrode 21 and the second electrode 22 when the pressure of the pressure plate 100 is released.

That is, the pressure plate 100 may adjust the distance between the first electrode 21 and the second electrode 22 by changing an intensity of pressure applied to the stack 20 according to the deionization operation and the descaling operation of the water treatment apparatus 1 or by terminating the pressure in the descaling operation.

The intensity of pressure on the stack 20 by the pressure plate 100 or whether the pressure plate 100 presses the stack 20 or not may be changed according to a level on which water is stored in the second internal space 16, which will be described later. The level on which water is stored in the second internal space 16 may be adjusted by opening and closing the supply pipe 40 and the discharge pipe 50, which will be described later, based on each operation of the water treatment apparatus 1.

Accordingly, the user's convenience may be increased because a user does not need to additionally control or manipulate the water treatment apparatus 1.

The pressure plate 100 may divide the internal space 11 of the housing 10 into the first internal space 15 and the second internal space 16. The pressure plate 100 may define the first internal space 15 and the second internal space 16 with respect to the stacking direction of the first electrode 21 and the second electrode 22.

A lower end of the first internal space 15 with respect to the stacking direction of the first electrode 21 and the second electrode 22 may be formed by the pressure plate 100. A lower end of the stack 20 with respect to the stacking direction of the first electrode 21 and the second electrode 22 may be supported by the pressure plate 100.

An upper end of the second internal space 16 may be formed by the pressure plate 100.

A lower end of the second internal space 16 may be formed by a lower surface 14a of the internal space 11 of the housing 10.

The stack 20 may be disposed in the first internal space 15 defined by the pressure plate 100. Water may flow into the first internal space 15 through the inlet 17 and deionized by passing through the stack 20 and then be discharged to the first internal space 15 through the outlet 18.

The pressure plate 100 may be configured to reciprocate in the stacking direction of the first electrode 21 and the second electrode 22.

Because the pressure plate 100 forms the lower end of the first internal space 15 and the upper end of the second internal space 16, a volume of the first internal space 15 and the second internal space 16 may vary according to the position of the pressure plate 100. When the pressure plate 100 is moved in the direction in which the second internal space 16 increases, the pressure plate 100 may move toward the first internal space 15 and press the stack 20 disposed in the first internal space 15.

That is, as the pressure plate 100 is configured to be movable, the pressure plate 100 may be configured to press the stack 20 while moving toward the first internal space 15.

The water treatment apparatus 1 may include the supply pipe 40 provided to supply water to the second internal space 16, and the discharge pipe 50 provided to discharge water flowing into the second internal space 16 to the outside of the second internal space 16.

Water flowing into the second internal space 16 through the supply pipe 40 may be temporarily stored in the second internal space 16 and then discharged from the second internal space 16 through the discharge pipe 50.

One end of the supply pipe 40 may be connected to the second internal space 16 and the other end of the supply pipe 40 may be connected to the supplier 31.

The supply pipe 40 may include a supply pipe valve 41 configured to open and close the supply pipe 40.

When the supply pipe valve 41 is opened, water supplied from the supplier 31 may flow into the second internal space 16 through the supply pipe 40. Conversely, when the supply pipe valve 41 is closed, the water supplied from the supplier 31 may be blocked from flowing to the supply pipe 40 and may not flow into the second internal space 16.

One end of the discharge pipe 50 may be connected to the second internal space 16 and the other end of the discharge pipe 50 may be connected to the discharge portion 32.

The discharge pipe 50 may include a discharge pipe valve 51 configured to open and close the discharge pipe 50.

When the discharge pipe valve 51 is opened, water temporarily stored in the second internal space 16 may flow to the discharge portion 32 through the discharge pipe 50 and be discharged from the housing 10. Conversely, when the discharge pipe valve 51 is closed, the water stored in the second internal space 16 may be blocked from flowing to the discharge portion 32 and stored in the second internal space 16.

The pressure plate 100 may be moved toward the first internal space 15 or toward the second internal space 16 by a flow rate of water stored in the second internal space 16 through the supply pipe 40.

As an amount of the water stored in the second internal space 16 increases, the water stored in the second internal space 16 may press the pressure plate 100 and thus the pressure plate 100 may move toward the first internal space 15.

That is, the pressure plate 100 defines the first internal space 15 and the second internal space 16, and as a volume of the second internal space 16 is increased by water flowing into the second internal space 16 through the supply pipe 40, a volume of the first internal space 15 may be reduced.

At this time, the pressure plate 100 may be configured to reciprocate in the stacking direction of the first electrode 21 and the second electrode 22. Accordingly, the pressure plate 100 may be moved to the first internal space 15 to allow the volume of the first internal space 15 to be reduced as much as the volume of the second internal space 16 increases.

As the pressure plate 100 is moved toward the first internal space 15, the pressure plate 100 may press the stack 20 disposed in the first internal space 15, and the pressure plate 100 may continuously press the stack 20 by water stored while a certain amount of water is stored in the second internal space 16.

When the water stored in the second internal space 16 is discharged from the second internal space 16 through the discharge pipe 50, the pressure plate 100 may be moved into the second internal space 16 according to the amount of water that is discharged.

As the water stored in the second internal space 16 decreases, a pressure of the water pressing the pressure plate 100 may decrease, and thus the pressure plate 100 may be moved toward the second internal space 16.

For example, a pressure, which is generated as the width of the stack 20 in the stacking direction of the first electrode 21 and the second electrode 22 is restored because the compression of the stack 20 by the pressure plate 100 is released, or a pressure of water flowing into the first internal space 15 may be greater than a pressure that presses the pressure plate 100 into the first internal space 15 as the water stored in the second internal space 16 decreases. Accordingly, the pressure plate 100 may be moved toward the second internal space 16.

For example, as the first internal space 15 and the second internal space 16 are sequentially arranged in the vertical direction in the direction of gravity and the amount of water stored in the second internal space 16 decreases, the pressure plate 100 may be moved toward the second internal space 16.

In order to increase the efficiency of the deionization, the first distance d1 in the deionization operation of the water treatment apparatus 1 may be provided to be relatively less than the distance between the first electrode 21 and the second electrode 22 in different operation modes of the water treatment apparatus 1.

The pressure plate 100 may press the stack 20 to the stacking direction of the first electrode 21 and the second electrode 22, so as to allow the first distance d1 between the first electrode 21 and the second electrode 22 to be narrow.

For this, in the deionization operation, the water treatment apparatus 1 may open the supply pipe valve 41 to allow water to flow into the second internal space 16 so as to be stored in the second internal space 16. The water treatment apparatus 1 may close the discharge pipe valve 51 to allow water to be temporarily stored in the second internal space 16.

Accordingly, the pressure plate 100 may press the stack 20 as the pressure plate 100 moves toward the first internal space 15 by the water stored in the second internal space 16. Accordingly, the distance between the first electrode 21 and the second electrode 22 may be reduced so as to form the first distance d1.

In order for the water treatment apparatus 1 to deionize water, water is required to be supplied to the first internal space 15 through the supplier 31. At this time, as the supply pipe valve 41 is opened, water may be supplied to the first internal space 15 and at the same time, water may be supplied to the second internal space 16. Accordingly, in the deionization operation of the water treatment apparatus 1, the first distance d1 between the first electrode 21 and the second electrode 22 may be formed to be narrow.

In order to increase the efficiency of the descaling operation, the second distance d2 in the descaling operation of the water treatment apparatus 1 may be provided to be relatively greater than the distance d1 between the first electrode 21 and the second electrode 22 in the deionization operation.

The pressure plate 100 may be provided to release the pressure applied on the stack 20 in the stacking direction of the first electrode 21 and the second electrode 22, so as to allow the distance d2 between the first electrode 21 and the second electrode 22 to be increased.

For this, in the descaling operation, the water treatment apparatus 1 may open the discharge pipe valve 51 to allow water stored in the second internal space 16 to be discharged. Because water is continuously supplied to the first internal space 15 even in the descaling operation of the water treatment apparatus 1, the water treatment apparatus 1 may close the supply pipe valve 41 to prevent water, which is supplied from the supplier 31, from flowing into the second internal space 16 through the supply pipe 40.

Accordingly, the pressure plate 100 may be moved toward the second internal space 16 and the compression of the stack 20 may be released as the water stored in the second internal space 16 flows out. Accordingly, the distance d2 between the first electrode 21 and the second electrode 21 may be increased.

Hereinafter the water treatment apparatus 1 in the deionization operation and descaling operation states of the water treatment apparatus 1 will be described in detail.

As shown in FIG. 1, in response to the water treatment apparatus 1 being in the deionization operation, the supplier 31 of the water treatment apparatus 1 may be maintained in an open state and the supply pipe valve 41 connected to the supplier 31 may be provided to be open.

In response to the water treatment apparatus 1 being in the deionization operation, the discharge portion 32 of the water treatment apparatus 1 may be maintained in an open state and the discharge pipe valve 51 connected to the discharge portion 32 may be provided to be closed.

"The water treatment apparatus 1 being in the deionization operation" may include a preparation operation for the water treatment apparatus 1 to start the deionization operation before the water treatment apparatus 1 starts the deionization operation, that is, an operation in which the controller 90, which will be described later, controls each component of the water treatment apparatus 1 to allow the water treatment apparatus 1 to be driven in the deionization operation.

Therefore, water supplied through the supplier 31 may flow into the first internal space 15 through the inlet 17, be deionized by passing through the channel 23 of the stack 20, discharged to the outside of the first internal space 15 through the outlet 18 and then discharged to the outside of the housing 10 through the discharge portion 32.

In response to the water treatment apparatus 1 being in the deionization operation, the first electrode 21 and the second electrode 22 may generate an electric field as voltages of different magnitudes are applied to the first electrode21 and the second electrode 22.

The deionization of water flowing on the channel 23 may occur by the electric field formed by the first electrode 21 and the second electrode 22.

In addition, the water supplied through the supplier 31 may flow into the second internal space 16 through the supply pipe 40, and as the discharge pipe valve 51 is closed, the water flowing into the second internal space 16 may not flow out through the discharge portion 32 and may be stored in the second internal space 16.

As water is stored in the second internal space 16, the pressure plate 100 may be moved toward the first internal space 15 in conjunction with a first height h1 of water stored in the second internal space 16 in the stacking direction of the first electrode 21 and the second electrode 22.

When a direction in which the first internal space 15 is disposed in the stacking direction of the first electrode 21 and the second electrode 22 is defined as a first direction, and a direction in which the second internal space 16 is disposed in the stacking direction of the first electrode 21 and the second electrode 22 is defined as a second direction, the pressure plate 100 may be configured to move in the first direction in response to the water treatment apparatus 1 being in the deionization operation.

The pressure plate 100 may be moved in the first direction by a distance approximately corresponding to the first height h1 of the water stored in the second internal space 16.

In response to the water treatment apparatus 1 being in the deionization operation, the pressure plate 100 may be moved in the first direction and disposed in a first position 100A pressing the stack 20.

"The water treatment apparatus 1 being in the deionization operation" may include the preparatory operation for the water treatment apparatus 1 to start the deionization operation before the water treatment apparatus 1 starts the deionization operation, and thus the pressure plate 100 may be moved in the first direction before fluid flows to the stack 20.

The first position 100A may refer to a position in which the pressure plate 100 presses the stack 20 to form the first distance d1 between the first electrode 21 and the second electrode 22 to allow the deionization of the water flowing in the channel 23 to be performed uniformly.

The first distance d1 when the pressure plate 100 is disposed at the first position 100A may be less than a distance between the first electrode 21 and the first electrode 21 when the pressure plate 100 is not disposed at the first position 100A.

As the pressure plate 100 is disposed at the first position 100A, the stack 20 may be a first state 20A in which the stack 20 is pressed by the pressure plate 100 and the upper portion 12 of the housing 10 to be compressed in the first direction and/or the second direction.

When the stack 20 is maintained in the first state 20A, the first electrode 21 and the second electrode 22 forming the stack 20 may be also compressed in the first direction and/or the second direction, and thus a distance between the first electrode 21 and the second electrode 22 may be reduced.

The stack 20 may include a guide member 110 provided to guide movement of the pressure plate 100 in the first and second directions.

The guide member 110 may be disposed in the second internal space 16. However, the guide member 110 is not limited thereto and may be disposed in the first internal space 15.

The guide member 110 may be formed of an elastic material. Accordingly, the guide member 110 may be provided to contract and expand by elasticity when the pressure plate 100 moves in the first and second directions.

The guide member 110 may transmit external force to the pressure plate 100 to adjust an intensity to which the pressure plate 100 presses the stack 20.

The guide member 110 may guide the movement of the pressure plate 100 to prevent the pressure plate 100 from pressing the stack 20 above a predetermined pressure.

The guide member 110 may support the pressure plate 100 to prevent the pressure plate 100 from moving in the first direction from the first position 100A.

When the pressure plate 100 is moved further in the first direction than the first position 100A, the distance between the first electrode 21 and the second electrode 22 may be further reduced, and thus deionization of water flowing within the channel 23 may be performed uniformly. However, as a flow rate is reduced, deionization efficiency may be reduced, and as the force pressing the stack 20 increases, the stack may be damaged.

Accordingly, the guide member 110 may guide the pressure plate 100 to prevent the pressure plate 100 from moving in the first direction from the first position 100A so as to allow the first distance d1 to be maintained at a predetermined distance.

As shown in FIG. 6, in response to the water treatment apparatus 1 being in the descaling operation, the supplier 31 of the water treatment apparatus 1 may be maintained in an open state and the supply pipe valve 41 connected to the supplier 31 may be provided to be closed.

In response to the water treatment apparatus 1 being in the descaling operation, the discharge portion 32 of the water treatment apparatus 1 may be maintained in an open state, and the discharge pipe valve 51 connected to the discharge portion 32 may be provided to be open.

Therefore, water supplied through the supplier 31 may flow into the first internal space 15 through the inlet 17, be deionized by passing through the channel 23 of the stack 20, discharged to the outside of the first internal space 15 through the outlet 18 and then discharged to the outside of the housing 10 through the discharge portion 32.

In response to the water treatment apparatus 1 being in the descaling operation, a voltage may not be applied to the first electrode 21 and the second electrode 22. In the descaling operation, water flowing inside the channel 23 may physically collide with the first electrode 21 and the second electrode 22 and thus scale may be removed. Accordingly, there is no need for a voltage to be applied to the first electrode 21 and the second electrode 22. However, the present disclosure is not limited thereto, and a voltage, which is less than a voltage in the deionization operation, may be applied to the first electrode 21 and the second electrode 22, and thus the electric connection between the external terminals 24 and 25 and the first electrode 21 and the second electrode 22 may be maintained.

In addition, the water supplied through the supplier 31 may not flow into the second internal space 16 through the supply pipe 40 due to the closure of the supply pipe valve 41, and as the discharge pipe valve 51 is opened, the water stored in the second internal space 16 may be discharged through the discharge portion 32.

As the water stored in the second internal space 16 is discharged, the pressure plate 100 may be moved in the second direction in conjunction with a second height h2 of water stored in the second internal space 16 in the stacking direction of the first electrode 21 and the second electrode 22. That is, the pressure plate 100 may be configured to move in the second direction in response to the water treatment apparatus 1 being in the descaling operation.

The pressure plate 100 may be moved in the second direction by a distance approximately corresponding to the second height h2 of the water stored in the second internal space 16.

In response to the water treatment apparatus 1 being in the descaling operation, the pressure plate 100 may be moved in the second direction and disposed in a second position 100B in which the pressure applied on the stack 20 is released.

The second position 100B may refer to a position of the pressure plate 100 in which the pressure of the stack 20 is released to form the second distance d2 in which an amount of water flowing in the channel 23 is increased to effectively and physically remove scale remaining in the channel 23.

In addition, the second position 100B may refer to a position of the pressure plate 100 in which the distance between the first electrode 21 and the second electrode 22 is increased compared to the first distance d1 at the first position 100A. The second position 100B is the position of the pressure plate 100 forming the second distance d2. That is, when the pressure plate 100 is disposed at the second position 100B, the distance between the first electrode 21 and the second electrode 22 may be wider than a distance when the pressure plate 100 is disposed at the first position 100A.

"The water treatment apparatus 1 being in the descaling operation" may include a preparation operation for the water treatment apparatus 1 to start the descaling operation before the water treatment apparatus 1 starts the descaling operation, that is, an operation in which the controller 90 controls each component of the water treatment apparatus 1 to allow the water treatment apparatus 1 to be driven in the descaling operation.

Accordingly, an actuator 200 may be configured to move the pressure plate 100 to the second position 100A before fluid flows into the stack 20.

When the pressure plate 100 is disposed at the second position 100B, the pressure plate 100 may be disposed adjacent to the lower surface 14a of the internal space 11 of the housing 10. The pressure plate 100 at the second position 100B may be disposed closer to the lower surface 14a of the internal space 11 of the housing 10 than the pressure plate 100 at the first position 100A.

A volume of the second internal space 16 when the pressure plate 100 is disposed at the second position 100B may be reduced compared to when the pressure plate 100 is disposed at the first position 100A.

As the pressure plate 100 is disposed at the second position 100B, the stack 20 may be a second state 20B in which the pressure of the stack 20 applied by the pressure plate 100 and the upper portion 12 of the housing 10 is released and thus the compression in the first direction and/or the second direction is released.

The second state 20B of the stack 20 may be a state in which there is no pressure in the first direction and/or the second direction, or the first state 20A may be a state in which the pressure in the first direction and/or the second direction is reduced.

When the stack 20 is maintained in the second state 20B, the compression, which is applied to the first electrode 21 and the second electrode 22 forming the stack 20, in the first direction and/or the second direction may be also released. Accordingly, the distance between the first electrode 21 and the second electrode 22 may increase.

As the pressure plate 100 is moved to the second position 100B, the guide member 110 may contract and the volume of the second internal space 16 may be reduced.

When the descaling operation of the water treatment apparatus 1 is completed and the deionization operation is performed again, the water treatment apparatus 1 may allow the supplier 31, the discharge portion 32, and the supply pipe valve 41 to be in the open state, and allow the discharge pipe valve 51 to be in a closed state.

Additionally, voltages of different magnitudes may be applied to the first electrode 21 and the second electrode 22, respectively.

Accordingly, when the deionization operation of the water treatment apparatus 1 is performed again in a state in which the water stored in the second internal space 16 flows out due to the descaling operation of the water treatment apparatus 1, the pressure plate 100 may be moved back to the first position 100A while water is stored in the second internal space 16, and thus the distance d1 between the first electrode 21 and the second electrode 22 may be reduced.

That is, the pressure plate may be configured to move between the first position 100A and the second position 100B according to the operation mode of the water treatment apparatus 1 so as to change the distance between the first electrode 21 and the second electrode 22.

Hereinafter, the water treatment apparatus 1 in the deionization operation and the descaling operation will be described in detail.

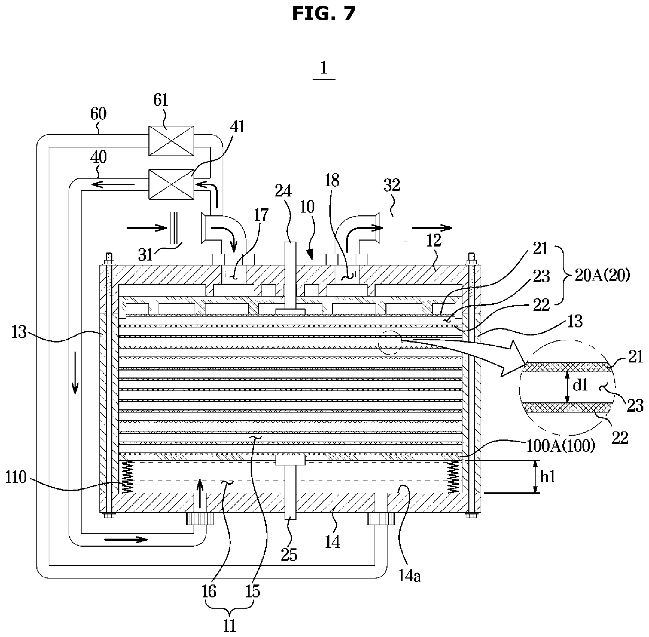

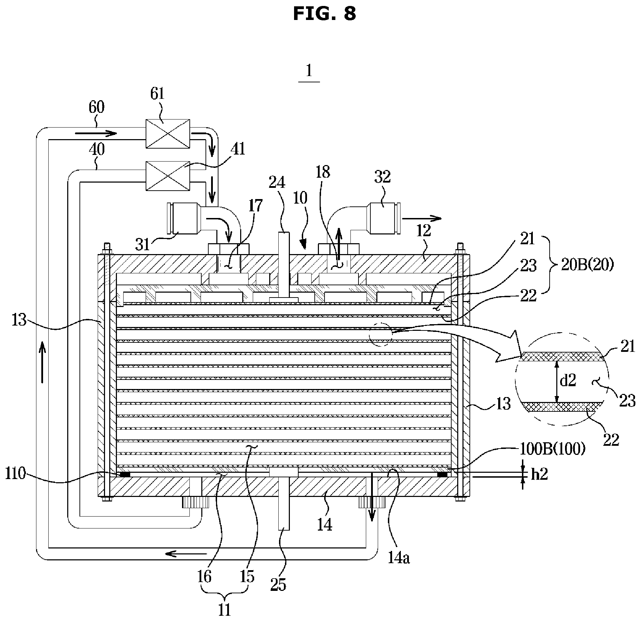

FIG. 7 is a schematic side cross-sectional view of a water treatment apparatus according to an embodiment in a deionization operation. FIG. 8 is a schematic side cross-sectional view of the water treatment apparatus according to an embodiment in a descaling operation

Water stored in the second internal space 16 may flow into the housing 10 in addition to water for water treatment, so as to allow the pressure plate 100 to be disposed at the first position 100A in the deionization operation of the water treatment apparatus 1.

Water flowing into the second internal space 16 may be temporarily stored in the second internal space 16 without being deionized, and then discharged to the outside of the housing 10. Some of the water, which is required to be purified through the deionization, may simply flow into the second internal space 16 without the conversion process and then be discharged to the outside. Accordingly, water treatment efficiency may be reduced. That is, in order to increase the efficiency of the deionization operation of the water treatment apparatus 1, the water flowing into the water treatment apparatus 1 may be wasted.

To prevent this, the water treatment apparatus 1 shown in FIGS. 4 and 5 may not directly discharge water stored in the second internal space 16 to move the pressure plate 100 in the deionization operation of the water treatment apparatus 1, but may move the water stored in the second internal space 16 to the first internal space 15 in the descaling operation of the water treatment apparatus 1. Accordingly, the water treatment apparatus 1 may recycle the water flowing into the second internal space 16 so as to prevent wasting water.

The water treatment apparatus 1 may include the supply pipe 40 provided to supply water to the second internal space 16, and a discharge pipe 60 provided to discharge water, which flows into the second internal space 16, to the outside of the second internal space 16.

One end of the supply pipe 40 may be connected to the second internal space 16 and the other end of the supply pipe 40 may be connected to the supplier 31.

One end of the discharge pipe 60 may be connected to the second internal space 16 and the other end of the discharge pipe 60 may be connected to the supplier 31.

The discharge pipe 60 may include a discharge pipe valve 61 configured to open and close the discharge pipe 60.

When the discharge pipe valve 61 is opened, water temporarily stored in the second internal space 16 may flow to the discharge portion 32 through the discharge pipe 60 and flow out of the second internal space 16. Conversely, when the discharge pipe valve 61 is closed, the water stored in the second internal space 16 may be blocked from flowing to the supplier 31 and stored in the second internal space 16.

When the discharge pipe valve 61 is opened while the supplier 31 is open, the water stored in the second internal space 16 may flow to the supplier 31 through the discharge pipe 60, and water flowing into the supplier 31 through the discharge pipe 60 may flow into the first internal space 15 through the inlet 17.

That is, when the discharge pipe valve 61 is opened while the supplier 31 is open, the water temporarily stored in the second internal space 16 may flow into the first internal space 15 and then be discharged to the outside of the housing 10 through the discharge portion 32.

An operation in which the water stored in the second internal space 16 is discharged may be performed in response to the water treatment apparatus 1 being in the descaling operation, and at this time, the pressure plate 100 may be disposed at the second position 100B.

An operation in which water stored in the second internal space 16 flows into the first internal space 15 may be performed in response to the water treatment apparatus 1 being in the descaling operation, and may be an operation in which purification of water flowing into the first internal space 15 is substantially not performed. Accordingly, the water treatment may be performed even when contaminated water flows into the first internal space 15.

Therefore, it is possible to replace water, which flows into the first internal space 15 from the outside for the descaling operation of the water treatment apparatus 1, with water that is temporarily stored in the second internal space 16. Accordingly, by reusing the water flowing into the housing 10, the water treatment efficiency of the water treatment apparatus 1 may be increased.

As shown in FIG. 4, in response to the water treatment apparatus 1 being in the deionization operation, the supplier 31 and the discharge portion 32 of the water treatment apparatus 1 may be maintained in an open state. The supply pipe valve 41 connected to the supplier 31 may be provided to be open. At this time, the discharge pipe valve 61 connected to the supplier 31 may be provided to be closed.

Therefore, water supplied through the supplier 31 may flow into the first internal space 15 through the inlet 17, be deionized by passing through the channel 23 of the stack 20, be discharged to the outside of the first internal space 15 through the outlet 18 and then discharged to the outside of the housing 10 through the discharge portion 32.

In addition, the water supplied through the supplier 31 may flow into the second internal space 16 through the supply pipe 40, and as the discharge pipe valve 61 is closed, the water flowing into the second internal space 16 may not flow into the first internal space 15 through the supplier 31 but be stored in the second internal space 16.

As water is stored in the second internal space 16, the pressure plate 100 may be moved toward the first internal space 15 in conjunction with a first height h1 of water stored in the second internal space 16 in the stacking direction of the first electrode 21 and the second electrode 22.

The pressure plate 100 may be moved in the first direction by a distance approximately corresponding to the first height h1 of the water stored in the second internal space 16.

In response to the water treatment apparatus 1 being in the deionization operation, the pressure plate 100 may be moved in the first direction and disposed at a first position 100A pressing the stack 20.

As the pressure plate 100 is disposed at the first position 100A, the stack 20 may be a first state 20A in which the stack 20 is pressed by the pressure plate 100 and the upper portion 12 of the housing 10 to be compressed in the first direction and/or the second direction.

When the stack 20 is maintained in the first state 20A, the first electrode 21 and the second electrode 22 forming the stack 20 may be also compressed in the first direction and/or the second direction, and thus a distance d1 between the first electrode 21 and the second electrode 22 may be reduced.

As shown in FIG. 5, in response to the water treatment apparatus 1 being in the descaling operation, the discharge portion 32 of the water treatment apparatus 1 may be maintained in an open state and the supply pipe valve 41 connected to the supplier 31 may be provided to be closed. At this time, the supplier 31 may be provided to be in a closed state, and the discharge pipe valve 61 connected to the supplier 31 may be provided to be open.

Therefore, as the supplier 31 is closed, water may not flow into the first internal space 15 from the outside through the supplier 31.

That the supplier 31 is closed may refer to a state in which it is prevented that water flows into the supplier 31 from the outside and moves to the inlet 17. Even when the supplier 31 is closed, the supplier 31 may move water to the inlet 17 when water flows from the discharge pipe 60 connected to the supplier 31.

As the discharge pipe valve 61 is opened and the supplier 31 is closed, water, which flows from the second internal space 16 to the supplier 31 through the discharge pipe 60, may flow into the first internal space 15 through the inlet 17 and scale may be removed while the water passes through the channel 23 of the stack 20. The water may be discharged to the outside of the first internal space 15 through the outlet 18 and discharged to the outside of the housing 10 through the discharge portion 32.

That is, in response to the start of the descaling operation of the water treatment apparatus 1, the water temporarily stored in the second internal space 16 in the deionization operation of the water treatment apparatus 1 may move from the second internal space 16 to the supplier 31 through the discharge pipe 60 and flow into the first internal space 15 from the supplier 31 through the inlet 17.

Water flowing into the housing 10 for movement of the pressure plate 100 in the deionization operation of the water treatment apparatus 1 may not be deionized. However, the water flowing into the housing 10 for the movement of the pressure plate 100 may flow into the housing 10 in the deionization operation and the descaling operation of the water treatment apparatus 1, respectively. Accordingly, the water may flow into the housing 10 twice, and thus an amount of water wasted when the water treatment apparatus 1 is operated may be reduced.

While the water stored in the second internal space 16 flows into the supplier 31 and flows into the first internal space 15 as the discharge pipe valve 61 is opened, the supplier 31 and the supply pipe valve 41 may be closed and thus water stored in the second internal space 16 may be continuously discharged to the outside without water additionally flowing into the second internal space 16.

As the water stored in the second internal space 16 is discharged, the pressure plate 100 may be moved in the second direction in conjunction with the second height h2 of the water stored in the second internal space 16. That is, the pressure plate 100 may be configured to move in the second direction in response to the water treatment apparatus 1 being in the descaling operation.

In response to the water treatment apparatus 1 being in the descaling operation, the pressure plate 100 may be moved in the second direction and disposed in the second position 100B in which the pressure of the stack 20 is released.

As the pressure plate 100 is disposed at the second position 100B, the stack 20 may be a second state 20B in which the pressure of the stack 20 applied by the pressure plate 100 and the upper portion 12 of the housing 10 is released and thus the compression in the first direction and/or the second direction is released.

When the descaling operation of the water treatment apparatus 1 is completed and the deionization operation is performed again, the water treatment apparatus 1 may allow the supplier 31, the discharge portion 32, and the supply pipe valve 41 to be in the open state, and allow the discharge pipe valve 61 to be in a closed state.

After water, which flows into the first internal space 15 by passing through the second internal space 16, completes the removal of scale inside the stack 20 due to the descaling operation of the water treatment apparatus, the water may be discharged to the outside of the housing 10 and the water treatment apparatus 1 may start the deionization operation again.

Accordingly, when the water treatment apparatus 1 starts the deionization operation in a state in which the water stored in the second internal space 16 is discharged into the first internal space 15 due to the descaling operation of the water treatment apparatus 1, water may be again stored in the second internal space 16, and the pressure plate 100 may be moved back to the first position 100A.

Water flowing into the second internal space 16 may be temporarily stored in the second internal space 16 and then flow into the first internal space 15 through the discharge pipe 60 when the water treatment apparatus 1 starts the descaling operation.

Hereinafter, the water treatment apparatus 1 in the deionization operation and the descaling operation of the water treatment apparatus 1 will be described in detail.

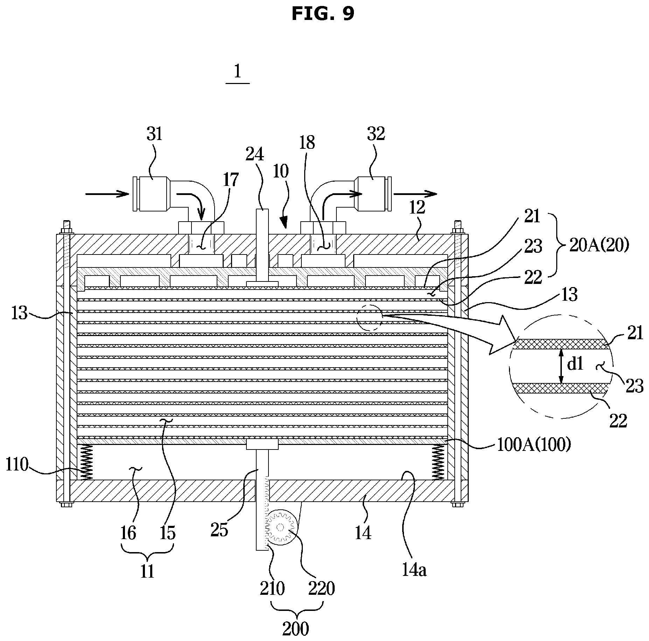

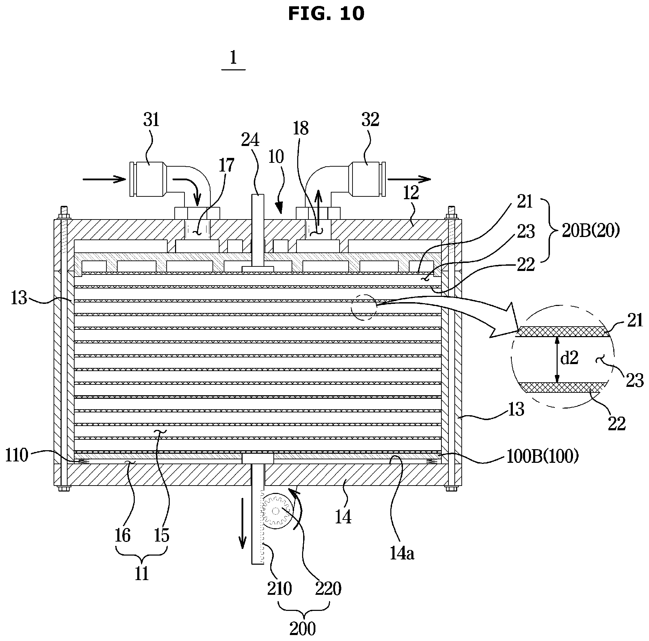

FIG. 9 is a schematic side cross-sectional view of a water treatment apparatus according to an embodiment in a deionization operation, and FIG. 10 is a schematic side cross-sectional view of the water treatment apparatus according to an embodiment in a descaling operation.

As illustrated in FIGS. 9 and 10, the water treatment apparatus 1 may include an actuator 200 configured to move the pressure plate 100 to allow the pressure plate 100 to move between the first position 100A and the second position 100B.

The actuator 200 may include a rack 210 and a pinion 220. The actuator 200 may include a drive motor configured to drive the pinion 220.

The rack 210 may be configured to reciprocate in the stacking direction of the first electrode 21 and the second electrode 22.

The pressure plate 100 may be moved between the first position 100A and the second position 100B in conjunction with the movement of the rack 210.

For example, the actuator 200 may be configured to move the pressure plate 100 through the rack 210 and the pinion 220, but the actuator 200 is not limited thereto. Alternatively, the actuator 200 may move the pressure plate 100 by including a cam or a plurality of gears.

The actuator 200 may be disposed outside the housing 10. However, the actuator 200 is not limited thereto and may be disposed inside the second internal space 16.

A volume of the second internal space 16 may be changed according to a position of the pressure plate 100 without fluid that flows from the outside to the second internal space 16. For example, the volume of the second internal space 16 when the actuator 200 is disposed outside the housing 10 may be smaller than that of the second internal space 16 when the actuator 200 is disposed inside the second internal space 16.

As illustrated in FIG. 9, in response to the water treatment apparatus 1 being in the deionization operation, the actuator 200 may move the pressure plate 100 to a direction in which, the stack 20 is disposed, to allow the pressure plate 100 to be disposed at the first position 100A.

The rack 210 may be moved to the second internal space 16 in conjunction with the rotation of the pinion 220, and accordingly, the pressure plate 100 may be interlocked with the movement of the rack 210 so as to be disposed at the first position 100A pressing the stack 20.

The supplier 31 and the discharge portion 32 of the water treatment apparatus 1 may be maintained in an open state and thus fluid supplied from the supplier 31 may flow into the stack 20 through the inlet 17. As the pressure plate 100 is disposed at the first position 100A, the stack 20 may be in a first state 20A in which the stack 20 is pressed by the pressure plate 100 and the upper portion 12 of the housing 10 to be compressed in the first direction and/or the second direction. The fluid flowing into the stack 20 may be deionized by passing through the stack 20 in the first state 20A, discharged to the outside of the first internal space 15 through the outlet 18 and then discharged to the outside of the housing 10 through the discharge portion 32.

When the stack 20 is maintained in the first state 20A, the first electrode 21 and the second electrode 22 forming the stack 20 may be also compressed in the first direction and/or the second direction, and thus a distance d1 between the first electrode 21 and the second electrode 22 may be reduced.

As the pressure plate 100 is disposed at the first position 100A, the stack 20 may be in the first state 20A in which the stack 20 is pressed by the pressure plate 100 and the upper portion 12 of the housing 10 to be compressed in the first direction and/or the second direction.

In the second internal space 16, the pressure plate 100 may be moved in the first direction from the lower surface 14a of the internal space 11 by a distance corresponding to a height in which one end of the rack 210 is moved upward from the lower surface 14a of the internal space 11.

As illustrated in FIG. 10, in response to the water treatment apparatus 1 being in the descaling operation, the actuator 200 may move the pressure plate 100 to a direction opposite to the direction in which the stack 20 is disposed, so as to allow the pressure plate 100 to be disposed at the second position 100B.

The rack 210 may be moved from the second internal space 16 to the outside of the housing 10 in conjunction with the rotation of the pinion 220, and accordingly, the pressure plate 100 may be interlocked with the movement of the rack 210 so as to be disposed at the second position 100B in which the pressure applied to the stack 20 is released.

The supplier 31 and the discharge portion 32 of the water treatment apparatus 1 may be maintained in an open state and thus fluid supplied from the supplier 31 may flow into the stack 20 through the inlet 17. As the pressure plate 100 is disposed at the second position 100B, the stack 20 may be in a second state 20B in which the pressure of the stack 20 applied by the pressure plate 100 and the upper portion 12 of the housing 10 is released and thus the compression in the first direction and/or the second direction is released. The fluid flowing into the stack 20 may remove scale remaining in the first electrode 21 and the second electrode 22 by passing through the stack 20 in the second state 20B, and be discharged to the outside of the first internal space 15 through the outlet 18 and then discharged to the outside of the housing 10 through the discharge portion 32.

When the stack 20 is maintained in the second state 20B, the compression, which is applied to the first electrode 21 and the second electrode 22 forming the stack 20, in the first direction and/or the second direction may be also released. Accordingly, a distance d2 between the first electrode 21 and the second electrode 22 may increase.

One end of the rack 210 may be moved toward the lower surface 14a of the internal space 11 from a position thereof that allows the pressure plate 100 to be disposed at the first position 100A, and the pressure plate 100 may be moved to a direction, in which the lower surface 14a of the internal space 11 is disposed, by a distance approximately corresponding to the movement distance of the one end of the rack 210.

The pressure plate 100 may be moved in the second direction and disposed at the second position 100B in which the pressure applied on the stack 20 is released.

As the pressure plate 100 is disposed at the second position 100B, the stack 20 may be in a second state 20B in which the pressure of the stack 20 applied by the pressure plate 100 and the upper portion 12 of the housing 10 is released and thus the compression in the first direction and/or the second direction is released.

When the descaling operation of the water treatment apparatus 1 is completed and the deionization operation is performed again, the actuator 200 may drive the pinion 220 to allow the rack 210 to move back to the second internal space 16 and the pressure plate 100 may be moved from the second position 100B back to the first position 100A to press the stack 20.

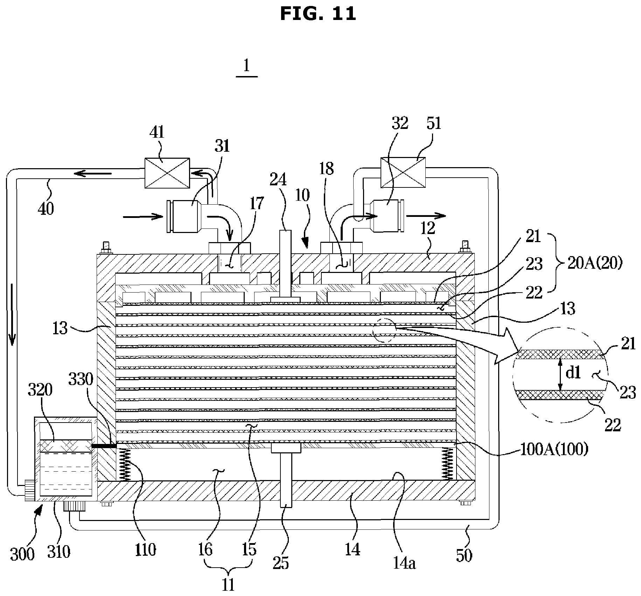

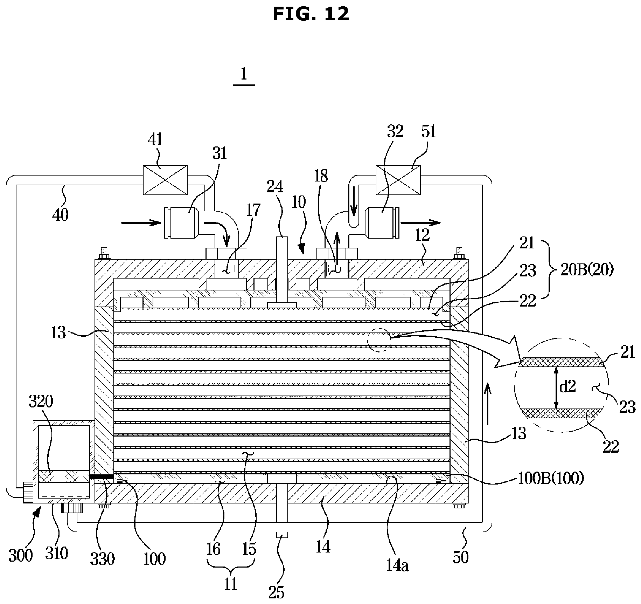

FIG. 11 is a schematic side cross-sectional view of a water treatment apparatus according to an embodiment in a deionization operation, and FIG. 12 is a schematic side cross-sectional view of the water treatment apparatus according to an embodiment in a descaling operation.

As illustrated in FIGS. 11 and 12, the water treatment apparatus 1 may include an actuator 300 configured to move the pressure plate 100 to allow the pressure plate 100 to move between the first position 100A and the second position 100B.

The actuator 300 may include a storage tank 310 in which the fluid supplied from the supply pipe 40 is stored, an adjustment member 320 configured to move the pressure plate 100 between the first position 100A and the second position 100B according to an amount of fluid stored in the storage tank 310, and a connecting portion 330 provided to connect the adjustment member 320 and the pressure plate 100.

The storage tank 310 may be provided to be connected to the supply pipe 40 and the discharge pipe 50. When the supply pipe valve 41 is opened and the discharge pipe valve 51 is closed, the fluid may be supplied into the storage tank 310 through the supply pipe 40 and stored for a certain period of time, and when the supply pipe valve 41 is closed and the discharge pipe valve 51 is opened, the temporarily stored fluid may be discharged from the storage tank 310 to the outside.

The adjustment member 320 may be configured to reciprocate in the stacking direction of the first electrode 21 and the second electrode 22 according to the amount of fluid stored in the storage tank 310. When the amount of fluid stored in the storage tank 310 increases, the adjustment member 320 may be moved in a direction in which the stack 20 is disposed, and when the amount of fluid stored in the storage tank 310 decreases, the adjustment member 320 may be moved in a direction opposite to the direction in which the stack 20 is disposed.

The pressure plate 100 may be moved between the first position 100A and the second position 100B in conjunction with the movement of the adjustment member 320. However, the pressure plate 100 and the adjustment member 320 are not limited thereto. Alternatively, the pressure plate 100 and the adjustment member 320 may be provided as a single structure and at this time, one end of the pressure plate 100 may protrude outside the internal space 11 of the housing 10 and be disposed inside the storage tank 310.

The actuator 300 may be disposed outside the housing 10. However, the actuator 300 is not limited thereto and may be formed on another area formed by the housing 10.

The actuator 300 may be disposed outside the internal space 11 of the housing 10.

A volume of the second internal space 16 may be changed according to a position of the pressure plate 100 without fluid that flows from the outside to the second internal space 16. For example, when the actuator 300 is disposed outside the housing 10, the volume of the second internal space 16 may be smaller than that of the second internal space 16 when the actuator 300 is disposed inside the second internal space 16.

For example, the connecting portion 330 may be formed as a member that directly connects the pressure plate 100 and the adjustment member 320, but is not limited thereto. The connecting portion 330 may be provided with a plurality of gears configured to allow the pressure plate 100 to reciprocate by transmitting a force that is generated by a position difference between the adjustment member 320 and the pressure plate 100 due to the movement of the adjustment member 320.

As illustrated in FIG. 11, in response to the water treatment apparatus 1 being in the deionization operation, the actuator 300 may move the pressure plate 100 to a direction, in which the stack 20 is disposed, to allow the pressure plate 100 to be disposed in the first position 100A.

In response to the water treatment apparatus 1 being in the deionization operation, a portion of the fluid supplied to the water treatment apparatus 1 may flow into the storage tank 310 through the supply pipe 40.

In response to the water treatment apparatus 1 being in the deionization operation, the supply pipe valve 41 may be opened and the discharge pipe valve 51 may be closed. Accordingly, a portion of the fluid supplied through the supplier 31 may flow into the storage tank 310 through the supply pipe 40 and be temporarily stored inside the storage tank 310.

As an amount of fluid stored in the storage tank 310 increases, a depth of the stored fluid may increase and accordingly, the adjustment member 320 may be moved in the direction, in which the stack 20 is disposed, according to the amount of fluid.

The pressure plate 100 may be connected to the adjustment member 320 by the connecting portion 330, and thus the pressure plate 100 may be moved to the direction, in which the stack 20 is disposed, according to the distance in which the adjustment member 320 is moved. Accordingly, the pressure plate 100 may be disposed at the first position 100A and may apply pressure to the stack 20.

As illustrated in FIG. 12, in response to the water treatment apparatus 1 being in the descaling operation, the actuator 300 may move the pressure plate 100 to a direction opposite to the direction, in which the stack 20 is disposed, to allow the pressure plate 100 to be disposed at the second position 100B.

In response to the water treatment apparatus 1 being in the descaling operation, the fluid temporarily stored in the storage tank 310 may be discharged to the storage tank 310 through the discharge pipe 50.

In response to the water treatment apparatus 1 being in the descaling operation, the supply pipe valve 41 may be closed and the discharge pipe valve 51 may be opened. Accordingly, the fluid may not flow into the storage tank 310 through the supply pipe 40, and the fluid temporarily stored in the storage tank 310 may be discharged from the storage tank 310 through the discharge pipe 50 and discharged to the outside through the discharge portion 32.

In response to the water treatment apparatus 1 being in the descaling operation, the entire fluid stored in the storage tank 310 may be discharged from the storage tank 310 through the discharge pipe 50, but is not limited thereto. At least a portion of the fluid stored in the storage tank 310 may remain inside the storage tank 310.

As the amount of fluid stored in the storage tank 310 decreases, the depth of the stored fluid may decrease, and accordingly, the adjustment member 320 may be moved in the opposite direction of the direction in which the stack 20 is disposed.

The pressure plate 100 may be connected to the adjustment member 320 by the connecting portion 330, and thus the pressure plate 100 may be moved to the direction, in which the stack 20 is disposed, according to the distance in which the adjustment member 320 is moved. Accordingly, the pressure plate 100 may be moved from the first position 100A to the second position 100B and the compression of the stack 20 may be released. In an embodiment, fluid stored in the storage tank 310 may be the same as fluid flowing into the stack 20, but is not limited thereto. The fluid flowing into the storage tank 310 may be fluid different from the fluid flowing into the stack 20.

At this time, the supply pipe 40, which supplies fluid to the actuator 300, and the discharge pipe 50, which discharges fluid from the actuator 300, may be not connected to the actuator 300, and a separate pipe may be connected to allow fluid, which is different from the fluid flowing into the stack 20, to flow into and out of the actuator 300. For example, the fluid flowing into the stack 20 may be water, and the fluid flowing into the actuator 300 may be oil-type fluid.

Hereinafter, the water treatment apparatus 1 in the descaling operation state of the water treatment apparatus 1 will be described in detail.

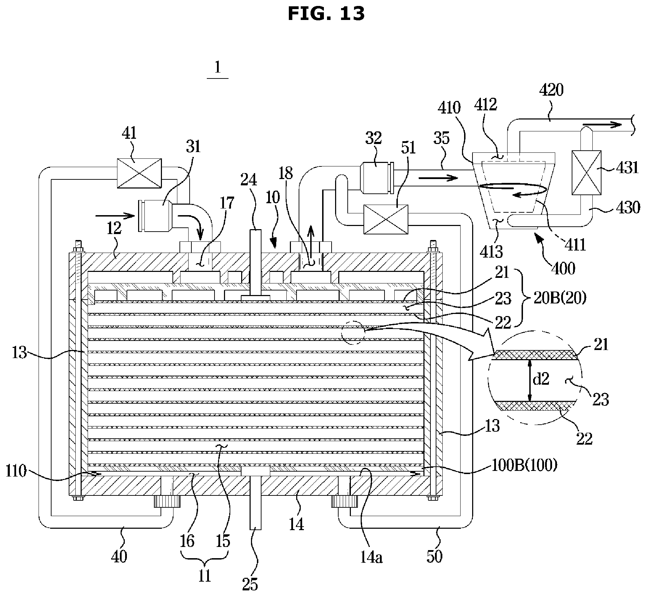

FIG. 13 is a schematic side cross-sectional view of a water treatment apparatus according to an embodiment in a descaling operation.

As illustrated in FIG. 13, the water treatment apparatus 1 may include a separation module 400 provided to allow scale, which is removed in the descaling operation of the water treatment apparatus 1, to be separated and discharged from the water treatment apparatus 1.

In response to the water treatment apparatus 1 being in the descaling operation, the fluid supplied into the stack 20 through the supplier 31 and the solid scale separated from the inside of the stack 20 may be discharged to the discharge portion 32.

At this time, in order to prevent the scale from mixing with the fluid and from being discharged from the water treatment apparatus 1, the discharge portion 32 may be connected to the separation module 400.

The separation module 400 may be configured to allow scale, which is discharged from the discharge portion 32, to be discharged from the water treatment apparatus 1 while the scale is distinguished from the fluid discharged from the discharge portion 32.

The separation module 400 may include a separation chamber 410 provided to separate scale and fluid.

The separation module 400 may include a fluid separation pipe 420 through which fluid separated from the scale is discharged from the separation module 400. The separation module 400 may include a scale separation pipe 430 through which scale separated from the fluid is discharged from the separation module 400.

The separation chamber 410 may be provided to be connected to the discharge portion 32. The water treatment apparatus 1 may include a connection pipe 35 connecting the discharge portion 32 and the separation chamber 410. However, the present disclosure is not limited thereto, and the discharge portion 32 and the separation chamber 410 may be directly connected without the connection pipe 35.

The separation chamber 410 may be a cyclone chamber configured to separate fluid and scale through centrifugation.

The separation chamber 410 may include a cone portion 411 disposed inside the separation chamber 410 and provided to guide a swirling flow of the fluid and scale to separate the scale from the fluid by centrifugal force.

While the fluid and the scale are rotated by the cone portion 411, the scale having a predetermined size may collide with an inner wall of the separation chamber 410 by centrifugal force and thus the scale may move to a lower chamber 413 of the separation chamber 410.

For example, scale may be naturally collected by gravity in an area of the lower chamber 413. However, the present disclosure is not limited thereto, and a collection portion configuration to collect scale may be additionally formed in the lower chamber 413, and the collection portion configuration may be directly connected to the scale separation pipe 430.

Not only the scale may flow to the lower chamber 413, but a portion of the fluid may flow to the lower chamber 413 with the scale.

The fluid in the rotation may be discharged to the outside of the separation chamber 410 through the fluid separation pipe 420 connected to an upper chamber 412 of the separation chamber 410. Because the scale is moved to the lower chamber 413, the scale may not flow in the fluid flowing in the upper chamber 412.

However, scale including particles having a small size may be less affected by centrifugal force and flow together with fluid in the upper chamber 412 and may be discharged to the outside of the separation chamber 410 through the fluid separation pipe 420.

The separation module 400 may include a scale separation pipe valve 431 configured to selectively open and close the scale separation pipe 430.

One end of the fluid separation pipe 420 may be connected to the upper chamber 412 of the separation chamber 410, and the other end of the fluid separation pipe 420 may be connected to the outside. Accordingly, all fluid discharged from the water treatment apparatus 1 may be discharged to the outside through the separation module 400 and the fluid separation pipe 420.

One end of the scale separation pipe 430 may be connected to the lower chamber 413 of the separation chamber 410, and the other end of the scale separation pipe 430 may be connected to the fluid separation pipe 420.

Accordingly, the scale flowing through the scale separation pipe 430 may flow into the fluid separation pipe 420.

However, only when the scale is required to be discharged by selectively opening and closing the scale separation pipe 430, the scale separation pipe valve 431 may open the scale separation pipe 430 to allow the scale to be discharged to the outside of the water treatment apparatus 1 through the fluid separation pipe 420.

However, the present disclosure is not limited thereto. The other end of the scale separation pipe 430 may be directly connected to the outside without being connected to the fluid separation pipe 420. At this time, the scale flowing through the scale separation pipe 430 may be completely separated from the fluid separated in the separation module 400 and discharged from the water treatment apparatus 1.

The scale separation pipe valve 431 may be configured to close the scale separation pipe 430 in response to the water treatment apparatus 1 being in the deionization operation and the descaling operation.

The scale separation pipe valve 431 may be configured to open the scale separation pipe 430 in response to the water treatment apparatus 1 being in the regeneration operation, so as to allow the scale to be discharged together with the fluid passing through the stack 20 in the regeneration operation.

The controller 90 may control the scale separation pipe valve 431 to be closed in the deionization operation and the descaling operation of the water treatment apparatus 1. Further, the controller 90 may control the scale separation pipe valve 431 to be open in the regeneration operation of the water treatment apparatus 1.

The separation module 400 may guide fluid, which flows into the separation module 400, to rotate and flow so as to separate scale from the fluid without physical filtering, and thus a filter for additionally filtering the scale may be not required. When the separation module 400 includes a filter configuration, a user needs to periodically replace the filter. However, the separation module 400 according to an embodiment of the present disclosure may be configured to separate fluid and scale without a filter configuration, and thus the filter replacement may be not required. Accordingly, it is possible to provide user convenience and increase the efficient operation time of the water treatment apparatus 1.

In addition, the separation module 400 may include the scale separation pipe valve 431 configured to selectively discharge scale, and thus in the regeneration operation of the water treatment apparatus 1, scale may be discharged from the water treatment apparatus 1 together with fluid discharged in the regeneration operation, without manual operation by the user. Accordingly, it is possible to provide user convenience and increase the efficient operation time of the water treatment apparatus 1.

Hereinafter, the water treatment apparatus 1 in the descaling operation state of the water treatment apparatus 1 will be described in detail.

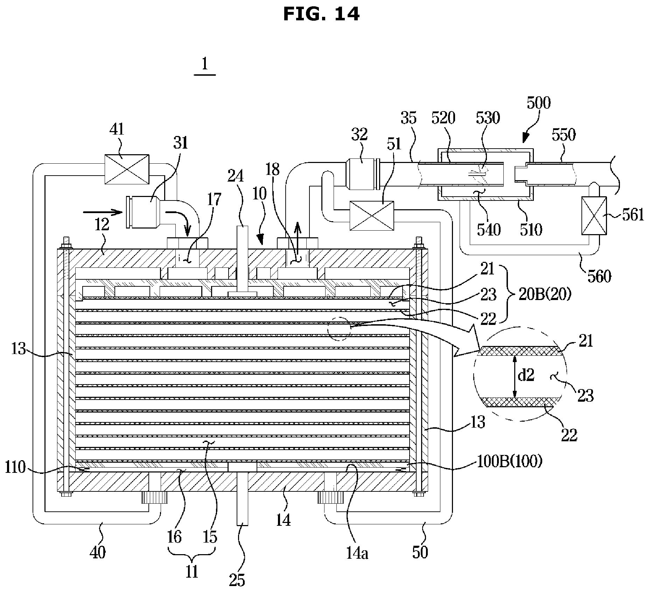

FIG. 14 is a schematic side cross-sectional view of a water treatment apparatus according to an embodiment in a descaling operation.

As illustrated in FIG. 14, the water treatment apparatus 1 may include a separation module 500 provided to allow scale, which is removed in the descaling operation of the water treatment apparatus 1, to be separated and discharged from the water treatment apparatus 1.

In response to the water treatment apparatus 1 being in the descaling operation, the fluid supplied into the stack 20 through the supplier 31 and the solid scale separated from the inside of the stack 20 may be discharged to the discharge portion 32.

At this time, in order to prevent the scale from mixing with the fluid and from being discharged from the water treatment apparatus 1, the discharge portion 32 may be connected to the separation module 500.

The separation module 500 may be configured to allow scale, which is discharged from the discharge portion 32, to be discharged from the water treatment apparatus 1 while the scale is distinguished from the fluid discharged from the discharge portion 32.

The separation module 500 may include a separation chamber 510 provided to separate scale and fluid.

The separation module 500 may include a fluid separation pipe 550 through which fluid separated from the scale is discharged from the separation module 500. The separation module 500 may include a scale separation pipe 560 through which scale separated from the fluid is discharged from the separation module 500.

The separation chamber 510 may be provided to be connected to the discharge portion 32. The water treatment apparatus 1 may include a connection pipe 35 connecting the discharge portion 32 and the separation chamber 510. However, the present disclosure is not limited thereto, and the discharge portion 32 and the separation chamber 510 may be directly connected without the connection pipe 35.

The separation chamber 510 may be a cyclone chamber configured to separate fluid and scale through centrifugation.

The separation chamber 510 may include a tube 520 disposed inside the separation chamber 510 and through which fluid and scale flowing from the discharge portion 32 flow, and a fan 530 disposed inside the separation chamber 510 and provided to guide a swirling flow of the fluid and scale to separate the scale from the fluid by centrifugal force.

One end of the tube 520 may be connected to the discharge portion 32 or the connection pipe 35, and the other end of the tube 520 may be provided to communicate with the inside of the separation chamber 510. Accordingly, the fluid flowing through the tube 520 may flow into the separation chamber 510 and then be discharged to the outside of the separation chamber 510 through the fluid separation pipe 550 or the scale separation pipe 560.

While the fluid and the scale are rotated by the fan 530, the scale having a predetermined size may collide with an inner wall of the separation chamber 510 by centrifugal force and thus move to a chamber inner circumferential surface 540 of the separation chamber 510. The chamber inner circumferential surface 540 may be defined as a space between the tube 520 and an inner circumferential surface of the separation chamber 510 in the separation chamber 510.

For example, scale moved to the chamber inner circumferential surface 540 may be moved to a lower side on the chamber inner circumferential surface 540 by gravity and then collected. However, the present disclosure is not limited thereto, and a collection portion configuration to collect scale may be additionally formed in the chamber inner circumferential surface 540, and the collection portion configuration may be directly connected to the scale separation pipe 560.

Not only the scale may flow to the chamber inner circumferential surface 540, but a portion of the fluid may flow to the chamber inner circumferential surface 540 with the scale.

The fluid separation pipe 550 may be disposed adjacent to the other end of the tube 520. Accordingly, the fluid passing through the other end of the tube 520 may be discharged to the outside of the separation chamber 510 through the fluid separation pipe 550.

Because the scale moves to the chamber inner circumferential surface 540 by centrifugal force while passing through the other end of the tube 520, the scale may not flow in the fluid flowing into the fluid separation pipe 550.

However, scale including particles having a small size may be less affected by centrifugal force and thus the scale may pass through the other end of the tube 520 together with the fluid. Accordingly, the scale and the fluid may be discharged to the outside of the separation chamber 510 through the fluid separation pipe 550.

The separation module 500 may include a scale separation pipe valve 561 configured to selectively open and close the scale separation pipe 560.

One end of the fluid separation pipe 550 may be connected to the other end of the tube 520 disposed inside the separation chamber 510, and the other end of the fluid separation pipe 550 may be connected to the outside. Accordingly, all fluid discharged from the water treatment apparatus 1 may be discharged to the outside through the separation module 500 and the fluid separation pipe 550.

One end of the scale separation pipe 560 may be connected to the chamber inner circumferential surface 540, particularly, a lower portion of the chamber inner circumferential surface 540. The other end of the scale separation pipe 560 may be connected to the fluid separation pipe 550.

Accordingly, the scale flowing through the scale separation pipe 560 may flow into the fluid separation pipe 550.

However, only when the scale is required to be discharged by selectively opening and closing the scale separation pipe 560, the scale separation pipe valve 561 may open the scale separation pipe 560 to allow the scale to be discharged to the outside of the water treatment apparatus 1 through the fluid separation pipe 550.

However, the present disclosure is not limited thereto. The other end of the scale separation pipe 560 may be directly connected to the outside without being connected to the fluid separation pipe 550. At this time, the scale flowing through the scale separation pipe 560 may be completely distinguished from the fluid separated in the separation module 500 and discharged from the water treatment apparatus 1.

The scale separation pipe valve 561 may be configured to close the scale separation pipe 560 in response to the water treatment apparatus 1 being in the deionization operation and the descaling operation.

The scale separation pipe valve 561 may be configured to open the scale separation pipe 560 in response to the water treatment apparatus 1 being in the regeneration operation, so as to allow the scale to be discharged together with the fluid passing through the stack 20 in the regeneration operation.

The controller 90 may control the scale separation pipe valve 561 to be closed in the deionization operation and the descaling operation of the water treatment apparatus 1. Further, the controller 90 may control the scale separation pipe valve 561 to be open in the regeneration operation of the water treatment apparatus 1.

The separation module 500 may guide fluid, which flows into the separation module 500, to rotate and flow so as to separate scale from the fluid without physical filtering, and thus a filter for additionally filtering the scale may be not required. When the separation module 500 includes a filter configuration, a user needs to periodically replace the filter. However, the separation module 500 according to an embodiment of the present disclosure may be configured to separate fluid and scale without a filter configuration, and thus the filter replacement may be not required. Accordingly, it is possible to provide user convenience and increase the efficient operation time of the water treatment apparatus 1.

In addition, the present disclosure is not limited to the separation modules 400 and 500 shown in FIGS. 13 and 14, and the separation module of the water treatment apparatus 1 may include a configuration of any shape that separates scale in the fluid through centrifugation.

In addition, the separation module 400 may include the scale separation pipe valve 431 configured to selectively discharge scale, and thus in the regeneration operation of the water treatment apparatus 1, scale may be discharged from the water treatment apparatus 1 together with fluid, which is discharged in the regeneration operation, without manual operation by the user. Accordingly, it is possible to provide user convenience and increase the efficient operation time of the water treatment apparatus 1.

The separation modules 400 and 500 illustrated in FIGS. 13 and 14 may be applied to all of the above-described embodiments. Additionally, a separation module including a configuration of any shape that separates scale in fluid through centrifugation may be applied to all of the above-described embodiments.

Hereinafter, the water treatment apparatus 1 in the deionization operation and the descaling operation of the water treatment apparatus 1 will be described in detail.

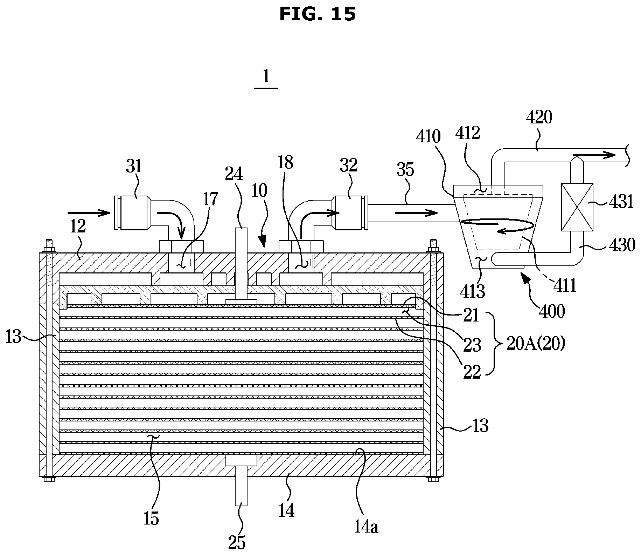

FIG. 15 is a schematic side cross-sectional view of a water treatment apparatus according to an embodiment in a descaling operation.

An embodiment, in which only a filter portion is coupled without a pressure plate, will be described.

As illustrated in FIG. 15, the first electrode 21 and the second electrode 22 of the stack 20 of the water treatment apparatus 1 may have a constant distance in response to the water treatment apparatus 1 being in the deionization operation and the descaling operation.

The water treatment apparatus 1 may be configured to allow fluid, which passes through the stack 20, to pass through the discharge portion 32 and the separation module 400. That is, the water treatment apparatus 1 may be driven without the pressure plate 100 disclosed in an embodiment and the configuration configured to move the pressure plate 100. The water treatment apparatus 1 may include the separation module 400 so as to separate scale from fluid, which is discharged from the discharge portion 32, and to selectively discharge the separated scale. Additional aspects of the disclosure will be set forth in part in the description which follows and, in part, will be obvious from the description, or may be learned by practice of the disclosure.

While the present disclosure has been particularly described with reference to exemplary embodiments, it should be understood by those of skilled in the art that various changes in form and details may be made without departing from the spirit and scope of the present disclosure.

## Claims

1. A water treatment apparatus comprising:
a housing;
a stack configured to separate ions contained in fluid flowing into the housing and including a first electrode and a second electrode disposed to face the first electrode and configured to form an electric field with the first electrode; and
a pressure plate provided to partition an internal space of the housing into a first internal space in which the stack is disposed and a second internal space,
wherein the pressure plate is configured to press the stack in a first direction corresponding to a stacking direction of the first electrode and the second electrode, and
wherein the pressure plate is further configured to move between a first position in which the pressure plate moves in the first direction to press the stack and a second position spaced apart from the first position to a second direction opposite to the first direction.

2. The water treatment apparatus of claim 1, wherein
the water treatment apparatus is driven in one of a deionization operation to adsorb ions contained in the fluid flowing into the housing to the stack, a regeneration operation to desorb ions adsorbed to the stack in the deionization operation, and a descaling operation to remove scale generated in the stack,
wherein the pressure plate is disposed at the first position in the deionization operation, disposed at the first position in the regeneration operation, and disposed at the second position in the descaling operation.

3. The water treatment apparatus of claim 1, further comprising:
a supply pipe provided to supply water to the second internal space, and
a discharge pipe provided to discharge the water, which flows into the second internal space, to an outside of the second internal space,
wherein the pressure plate is moved to the first position in response to the water being supplied to the second internal space through the supply pipe, and the pressure plate is moved to the second position in response to the water of the second internal space being discharged through the discharge pipe.

4. The water treatment apparatus of claim 2, further comprising:
a supply pipe provided to supply water to the second internal space, and
a discharge pipe provided to discharge the water, which flows into the second internal space, to an outside of the second internal space,
wherein the water is supplied to the second internal space through the supply pipe in the deionization operation,
wherein the water of the second internal space is discharged through the discharge pipe in the descaling operation.

5. The water treatment apparatus of claim 3, wherein
the pressure plate is configured to press the stack in the first direction by being pressed by the water flowing into the second internal space.

6. The water treatment apparatus of claim 3, further comprising:
a supplier provided to supply water from an outside to the housing, and
a discharge portion provided to discharge water from the housing to the outside,
wherein the housing further comprises an inlet connected to the supplier and provided to allow water to flow into the first internal space and an outlet connected to the discharge portion and provided to discharge water from the first internal space, and
wherein the supply pipe is connected to the supplier, and the discharge pipe is connected to the discharge portion.

7. The water treatment apparatus of claim 1, wherein
a distance between the first electrode and the second electrode when the pressure plate is at the first position is less than a distance between the first electrode and the second electrode when the pressure plate is at the second position.

8. The water treatment apparatus of claim 1, wherein
the stack further comprises a spacer disposed between the first electrode and the second electrode,
wherein a width of the spacer when the pressure plate is at the first position is less than a width of the spacer when the pressure plate is at the second position.

9. The water treatment apparatus of claim 1, further comprising:
a discharge portion provided to discharge the fluid from the housing to the outside, and
a separation module connected to the discharge portion and configured to centrifugally separate scale in the fluid flowing through the discharge portion.

10. The water treatment apparatus of claim 9, wherein
the separation module comprises:
a separation chamber provided to separate the scale in the fluid flowing through the discharge portion, and
a cone portion disposed inside the separation chamber and provided to guide a swirling flow of the fluid flowing through the discharge portion.

11. The water treatment apparatus of claim 10, wherein the separation module further comprises a fluid separation pipe through which the fluid from which the scale is separated is discharged, a scale separation pipe through which the scale separated from the fluid is discharged, and a scale separation pipe valve configured to open and close the scale separation pipe, and
wherein one end of the scale separation pipe is connected to the fluid separation pipe.

12. The water treatment apparatus of claim 1, further comprising:
a discharge portion provided to discharge the fluid from the housing to the outside, and
a separation module connected to the discharge portion and configured to separate scale in the fluid flowing through the discharge portion,
wherein the separation module comprises:
a separation chamber provided to separate the scale in the fluid flowing through the discharge portion,
a tube disposed inside the separation chamber and provided to allow the fluid flowing through the discharge portion to flow into the separation chamber from the discharge portion, and
a fan disposed inside the tube and configured to rotate the fluid flowing through the discharge portion.

13. The water treatment apparatus of claim 12, wherein
the separation module further comprises a fluid separation pipe through which the fluid from which scale is separated is discharged, a scale separation pipe through which the scale separated from the fluid is discharged, and a scale separation pipe valve configured to open and close the scale separation pipe,
wherein one end of the scale separation pipe is connected to the fluid separation pipe.

14. The water treatment apparatus of claim 1, further comprising:
an actuator configured to move the pressure plate between the first position and the second position,
wherein the actuator comprises a rack configured to move the pressure plate, and a pinion connected to the rack.

15. The water treatment apparatus of claim 1, further comprising:
an actuator configured to move the pressure plate between the first position and the second position,
wherein the actuator comprises a storage tank provided to store fluid from an outside, and an adjustment member configured to be moved according to an amount of fluid stored in the storage tank and connected to the pressure plate, and
wherein the pressure plate is configured to be moved in conjunction with a position of the adjustment member.
